# EUROPEAN PATENT APPLICATION

(11) **EP 4 343 620 A1**
(43) Date of publication of application: **27.03.2024**
(21) Application number: 22804477.2
(22) Date of filing: 14.04.2022
(51) Int. Cl.: G06N 3/04, G06N 20/00

(54) **PREDICTION DEVICE, LEARNING DEVICE, PREDICTION METHOD, LEARNING METHOD, PREDICTION PROGRAM, AND LEARNING PROGRAM**

(30) Priority: 18.05.2021 JP 2021083921
(71) Applicant: Resonac Corporation, Tokyo (JP)
(72) Inventor: KAKUDA, Kohsuke, Tokyo 105-8518 (JP); FUJIMORI, Takahiro, Tokyo 105-8518 (JP); LEE, Haein, Tokyo 105-8518 (JP); TAKEMOTO, Shimpei, Tokyo 105-8518 (JP); MINAMI, Takuya, Tokyo 105-8518 (JP); OKUNO, Yoshishige, Tokyo 105-8518 (JP)
(74) Representative: Strehl Schübel-Hopf & Partner
(86) International application number: PCT/JP2022/017833
(87) International publication number: WO 2022/244563

(57) **Abstract**

Prediction accuracy is increased in a prediction device using a trained model. A prediction device includes: a first trained model and a second trained model configured to respectively output first output data and second output data in response to input of input data of a prediction target; and an output portion configured to obtain the first output data and the second output data and calculate a weighted average value or take a weighted majority, thereby outputting prediction data. The first trained model is configured such that prediction accuracy for the input data of an interpolation region becomes higher than in the second trained model. The second trained model is configured such that prediction accuracy for the input data of an extrapolation region becomes higher than in the first trained model.

## Description

### TECHNICAL FIELD

The present disclosure relates to a prediction device, a training device, a prediction method, a training method, a prediction program, and a training program.

### BACKGROUND ART

Conventionally, design of materials has been performed by repeating trial productions based on experiences of developers of materials. Meanwhile, an attempt has been made to apply training models to the design of materials. For example, by collecting design conditions upon trial productions and evaluation results of materials obtained through the trial productions (e.g., characteristic values of the materials) and then training a model using the collected data as a training data set, it is possible to predict, in advance, characteristic values of materials that are to be obtained through trial productions under new design conditions.

### Citation List

### Patent Documents

Patent Document 1: Japanese Laid-Open Patent Publication No. 2006-309709
Patent Document 2: Japanese Laid-Open Patent Publication No. 2019-28949

### Summary of Invention

### Technical Problem

In general, trained models can exhibit a certain degree of prediction accuracy for input data of an interpolation region, but cannot exhibit sufficient prediction accuracy for input data of an extrapolation region.

The present disclosure aims to increase prediction accuracy in a prediction device using a trained model.

### Solution to Problem

A prediction device according to a first aspect of the present disclosure includes:
a first trained model and a second trained model configured to respectively output first output data and second output data in response to input of input data of a prediction target; and
an output portion configured to obtain the first output data and the second output data and calculate a weighted average value or take a weighted majority, thereby outputting prediction data,
the first trained model being configured such that prediction accuracy for the input data of an interpolation region becomes higher than in the second trained model, and the second trained model being configured such that prediction accuracy for the input data of an extrapolation region becomes higher than in the first trained model.

A second aspect of the present disclosure is the prediction device as recited in the first aspect in which the output portion calculates the weighted average value or takes the weighted majority under a predefined weight.

A third aspect of the present disclosure is the prediction device as recited in the second aspect in which the predefined weight is determined based on an error between: the prediction data respectively output by the output portion under a plurality of types of weights in response to input of input data of a validation data set; and actual data corresponding to the input data of the validation data set.

A fourth aspect of the present disclosure is the prediction device as recited in the second aspect in which the first trained model, the second trained model, and the predefined weight are determined based on an error between: the prediction data respectively output by the output portion under a plurality of types of weights in response to input of input data of a validation data set to a plurality of types of first trained models and a plurality of types of second trained models; and actual data corresponding to the input data of the validation data set.

A fifth aspect of the present disclosure is the prediction device as recited in the fourth aspect in which
the plurality of types of first trained models are provided with mutually different hyperparameters, and/or are trained under mutually different training methods, and
the plurality of types of second trained models are provided with mutually different hyperparameters, and/or are trained under mutually different training methods.

A sixth aspect of the present disclosure is the prediction device as recited in the first aspect further including an identification portion configured to identify whether the input data of the prediction target are the input data of the interpolation region or the input data of the extrapolation region, in which
the output portion calculates the weighted average value or takes the weighted majority under a weight in accordance with an identification result by the identification portion.

A seventh aspect of the present disclosure is the prediction device as recited in the first aspect further including an identification portion configured to evaluate a magnitude of extrapolation of the input data of the prediction target, in which
the output portion calculates the weighted average value or takes the weighted majority under a weight in accordance with an evaluation result by the identification portion.

An eighth aspect of the present disclosure is the prediction device as recited in the seventh aspect of the present disclosure in which the identification portion evaluates the magnitude of the extrapolation of the input data of the prediction target using one or more of an evaluation method by uncertainty of random forest prediction, an evaluation method by uncertainty of Bayesian estimation, an evaluation method by Kernel density estimation, and an evaluation method by distance.

A ninth aspect of the present disclosure is the prediction device as recited in the sixth aspect in which the weight in accordance with the identification result includes a weight for the interpolation region and a weight for the extrapolation region,
the weight for the interpolation region is determined based on an error between: prediction data respectively output by the output portion under a plurality of types of weights in response to input of input data of the interpolation region of a validation data set; and actual data corresponding to the input data of the interpolation region of the validation data set, and
the weight for the extrapolation region is determined based on an error between: prediction data respectively output by the output portion under a plurality of types of weights in response to input of input data of the extrapolation region of the validation data set; and actual data corresponding to the input data of the extrapolation region of the validation data set.

A tenth aspect of the present disclosure is the prediction device as recited in the first aspect in which the first trained model is trained under one or more training methods of a decision tree, a random forest, gradient boosting, bagging, AdaBoost, a k-nearest neighbor algorithm, and a neural network, and
the second trained model is trained under one or more training methods of a Gaussian process, Kernel ridge, a support vector machine, linear, partial least squares, lasso, linear ridge, elastic net, Bayesian ridge, and a neural network.

A training device according to an eleventh aspect of the present disclosure includes:
a first trained model and a second trained model configured to respectively output first output data and second output data in response to input of input data of a validation data set;
an output portion configured to obtain the first output data and the second output data and calculate a weighted average value or take a weighted majority under a plurality of types of weights, thereby outputting respective prediction data; and
a determination portion configured to determine any one weight of the plurality of types of weights based on an error between the output respective prediction data and actual data corresponding to the input data of the validation data set.

A twelfth aspect of the present disclosure is the training device as recited in the eleventh aspect in which the determination portion determines a weight for an interpolation region based on an error between: the respective prediction data output by the output portion in response to input of input data of the interpolation region of the validation data set; and actual data corresponding to the input data of the interpolation region of the validation data set, and
the determination portion determines a weight for an extrapolation region based on an error between: the respective prediction data output by the output portion in response to input of input data of the extrapolation region of the validation data set; and actual data corresponding to the input data of the extrapolation region of the validation data set.

A thirteenth aspect of the present disclosure is the training device as recited in the eleventh aspect in which the output portion obtains the first output data and the second output data respectively output by a plurality of types of first trained models and a plurality of types of second trained models in response to input of input data of the validation data set to the plurality of types of the first trained models and the plurality of types of the second trained models, and calculates the weighted average value or takes the weighted majority under the plurality of types of weights, thereby outputting the respective prediction data, and
the determination portion determines, based on an error between the output respective prediction data and actual data corresponding to the input data of the validation data set:
any one first trained model of the plurality of types of the first trained models;
any one second trained model of the plurality of types of the second trained models; and
any one weight of the plurality of types of weights.

A fourteenth aspect of the present disclosure is the training device as recited in the thirteenth aspect in which the plurality of types of the first trained models are provided with mutually different hyperparameters, and/or are trained under mutually different training methods, and
the plurality of types of the second trained models are provided with mutually different hyperparameters, and/or are trained under mutually different training methods.

A fifteenth aspect of the present disclosure is the training device as recited in the eleventh aspect in which the first trained model is configured such that prediction accuracy for the input data of an interpolation region becomes higher than in the second trained model, and
the second trained model is configured such that prediction accuracy for the input data of an extrapolation region becomes higher than in the first trained model.

A sixteenth aspect of the present disclosure is the training device as recited in the fifteenth aspect in which the first trained model is trained under one or more training methods of a decision tree, a random forest, gradient boosting, bagging, AdaBoost, a k-nearest neighbor algorithm, and a neural network, and
the second trained model is trained under one or more training methods of a Gaussian process, Kernel ridge, a support vector machine, linear, partial least squares, lasso, linear ridge, elastic net, Bayesian ridge, and a neural network.

A prediction method according to a seventeenth aspect of the present disclosure includes:
outputting first output data and second output data respectively by a first trained model and a second trained model in response to input of input data of a prediction target; and
obtaining the first output data and the second output data and calculating a weighted average value or taking a weighted majority, thereby outputting prediction data,
the first trained model being configured such that prediction accuracy for the input data of an interpolation region becomes higher than in the second trained model, and the second trained model being configured such that prediction accuracy for the input data of an extrapolation region becomes higher than the first trained model.

A training method according to an eighteenth aspect of the present disclosure includes:
outputting first output data and second output data respectively by a first trained model and a second trained model in response to input of input data of a validation data set;
obtaining the first output data and the second output data and calculating a weighted average value or taking a weighted majority under a plurality of types of weights, thereby outputting respective prediction data; and
determining any one weight of the plurality of types of weights based on an error between the output respective prediction data and actual data corresponding to the input data of the validation data set.

A prediction program according to a nineteenth aspect of the present disclosure is a prediction program that causes a computer to execute:
outputting first output data and second output data respectively by a first trained model and a second trained model in response to input of input data of a prediction target; and
obtaining the first output data and the second output data and calculating a weighted average value or taking a weighted majority, thereby outputting prediction data,
the first trained model being configured such that prediction accuracy for the input data of an interpolation region becomes higher than in the second trained model, and the second trained model being configured such that prediction accuracy for the input data of an extrapolation region becomes higher than the first trained model.

A training program according to a twentieth aspect of the present disclosure causes a computer to execute:
outputting first output data and second output data respectively by a first trained model and a second trained model in response to input of input data of a validation data set;
obtaining the first output data and the second output data and calculating a weighted average value or taking a weighted majority under a plurality of types of weights, thereby outputting respective prediction data; and
determining any one weight of the plurality of types of weights based on an error between the output respective prediction data and actual data corresponding to the input data of the validation data set.

### Advantageous Effects of Invention

According to the present disclosure, prediction accuracy can be increased in a prediction device using a trained model.

### BRIEF DESCRIPTION OF DRAWINGS

[FIG. 1] FIG. 1 is a first diagram exemplarily illustrating functional configurations of a training device in a training phase and a prediction device in a prediction phase.
[FIG. 2] FIG. 2 exemplarily illustrates hardware configurations of the training device and the prediction device.
[FIG. 3] FIG. 3 is a first flowchart illustrating a flow of a training process and a prediction process.
[FIG. 4] FIG. 4 is a second diagram exemplarily illustrating functional configurations of the training device in the training phase and the prediction device in the prediction phase.
[FIG. 5] FIG. 5 is a second flowchart illustrating the flow of the training process and the prediction process.
[FIG. 6] FIG. 6 is a first diagram exemplarily illustrating the functional configuration of the training device in an optimization phase.
[FIG. 7] FIG. 7 is a second diagram exemplarily illustrating the functional configuration of the training device in the optimization phase.
[FIG. 8] FIG. 8 is a third flowchart illustrating the flow of the training process and the prediction process.
[FIG. 9] FIG. 9 is a first flowchart illustrating a flow of an optimization process.
[FIG. 10] FIG. 10 is a third diagram exemplarily illustrating the functional configuration of the training device in the training phase.
[FIG. 11] FIG. 11 is a third diagram exemplarily illustrating the functional configuration of the training device in the optimization phase.
[FIG. 12] FIG. 12 is a fourth flowchart illustrating the training process and the prediction process.
[FIG. 13] FIG. 13 is a second flowchart illustrating the flow of the optimization process.
[FIG. 14] FIG. 14 is a fourth diagram exemplarily illustrating the functional configuration of the training device in the training phase.
[FIG. 15] FIG. 15 is a fourth diagram exemplarily illustrating the functional configuration of the training device in the optimization phase.
[FIG. 16] FIG. 16 is a fifth flowchart illustrating the flow of the training process and the prediction process.
[FIG. 17] FIG. 17 is a third flowchart illustrating the flow of the optimization process.
[FIG. 18] FIG. 18 is a table exemplarily illustrating prediction accuracy.

### DESCRIPTION OF EMBODIMENTS

Hereinafter, embodiments will be described with reference to the attached drawings. Note that, in the present specification and the drawings, constituent elements having substantially the same functional configurations are given the same symbols, and duplicate description thereof will be omitted.

### [First embodiment]

### <Functional configurations of training device and prediction device>

First, the functional configurations of the training device and the prediction device according to a first embodiment will be described. The training device according to the first embodiment will be described taking, as an example, a training device that is trained using a training data set including design conditions upon trial productions and characteristic values of materials obtained through the trial productions. Also, the prediction device according to the first embodiment will be described taking, as an example, a prediction device that predicts characteristic values of a material that is to be obtained through a trial production under new design conditions.

However, the training device and the prediction device according to the first embodiment are not limited to the above application, and can also be used for applications other than design of materials.

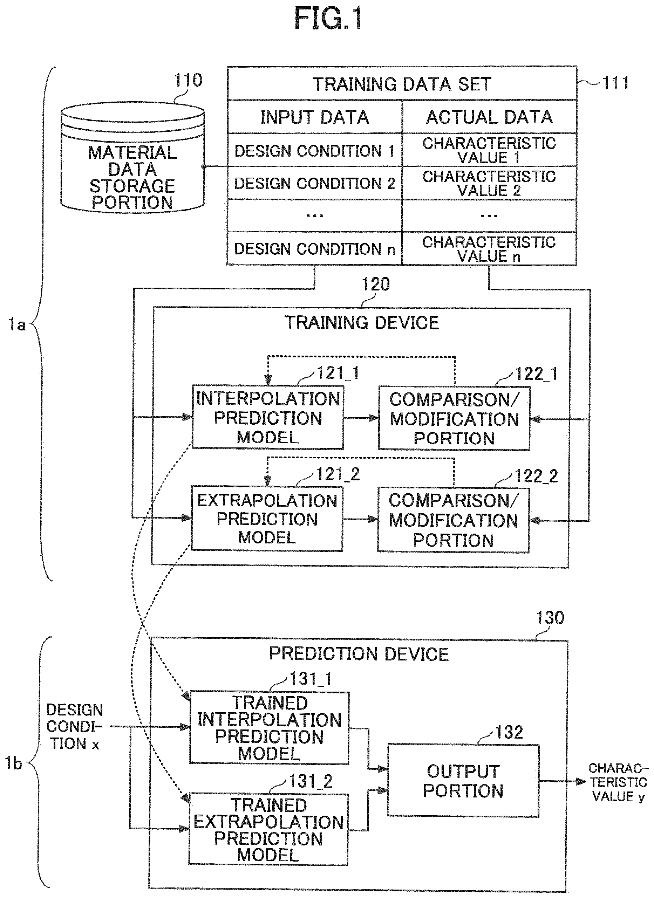

FIG. 1 is a first diagram exemplarily illustrating functional configurations of the training device in the training phase and the prediction device in the prediction phase. A training device 120 includes a training program installed therein, and in response to this program having being executed, the training device 120 functions as
- an interpolation prediction model 121_1,
- a comparison/modification portion 122_1,
- an extrapolation prediction model 121_2, and
- a comparison/modification portion 122_2 (see 1a of FIG. 1) .

The training device 120 uses a training data set 111 stored in a material data storage portion 110, and trains the interpolation prediction model 121_1 and the extrapolation prediction model 121_2, thereby generating a trained interpolation prediction model 131_1 and a trained extrapolation prediction model 131_2.

As illustrated in 1a of FIG. 1, the training data set 111 includes "input data" and "actual data" as items of information. Note that, the example of 1a of FIG. 1 illustrates that "design condition 1" to "design condition n" are stored in "input data", and "characteristic value 1" to "characteristic value n" are stored in "actual data".

The interpolation prediction model 121_1 is a model before training that is configured to generate the trained interpolation prediction model 131_1 having higher prediction accuracy for the input data of the interpolation region than the trained extrapolation prediction model 131_2.

The interpolation prediction model 121_1 outputs output data in response to input of "design condition 1" to "design condition n" stored in "input data" of the training data set 111.

The comparison/modification portion 122_1 updates a model parameter of the interpolation prediction model 121_1 in accordance with an error between the output data output from the interpolation prediction model 121_1 and "characteristic value 1" to "characteristic value n" stored in "actual data" of the training data set 111.

Thereby, the training device 120 generates the trained interpolation prediction model 131_1 (first trained model). Also, the training device 120 applies the generated trained interpolation prediction model 131_1 (second trained model) to a prediction device 130.

Note that, the interpolation prediction model 121_1 trained by the training device 120 is a model that is to be trained under one or more training methods of "a decision tree, a random forest, gradient boosting, bagging, AdaBoost, a k-nearest neighbor algorithm, and a neural network". In other words, as the interpolation prediction model 121_1 in the training device 120, a model to be trained under a training method suitable for the input data of the interpolation region is used.

Also, when the training device 120 trains the interpolation prediction model 121_1, a value suitable for the input data of the interpolation region (hyperparameter for the interpolation prediction model) is set as the hyperparameter of the interpolation prediction model 121_1.

Meanwhile, the extrapolation prediction model 121_2 is a model before training that is configured to generate the trained extrapolation prediction model 131_2 having higher prediction accuracy for the input data of the extrapolation region than the trained interpolation prediction model 131_1.

The extrapolation prediction model 121_2 outputs output data in response to input of "design condition 1" to "design condition n" stored in "input data" of the training data set 111.

The comparison/modification portion 122_2 updates a model parameter of the extrapolation prediction model 121_2 in accordance with an error between the output data output from the extrapolation prediction model 121_2 and "characteristic value 1" to "characteristic value n" stored in "actual data" of the training data set 111.

Thereby, the training device 120 generates the trained extrapolation prediction model 131_2. Also, the training device 120 applies the generated trained extrapolation prediction model 131_2 to the prediction device 130.

Note that, the extrapolation prediction model 121_2 trained by the training device 120 is a model that is to be trained under one or more training methods of "a Gaussian process, Kernel ridge, a support vector machine, linear, partial least squares, lasso, linear ridge, elastic net, Bayesian ridge, and a neural network". In other words, as the extrapolation prediction model 121_2 in the training device 120, a model to be trained under a training method suitable for the input data of the extrapolation region is used.

Also, when the training device 120 trains the extrapolation prediction model 121_2, a value suitable for the input data of the extrapolation region (hyperparameter for the extrapolation prediction model) is set as the hyperparameter of the extrapolation prediction model 121_2.

Meanwhile, the prediction device 130 includes a prediction program installed therein, and in response to this program having been executed, the prediction device 130 functions as
- the trained interpolation prediction model 131_1,
- the trained extrapolation prediction model 131_2, and
- an output portion 132 (see 1b of FIG. 1).

The trained interpolation prediction model 131_1 is generated through training of the interpolation prediction model 121_1 by the training device 120 using the training data set 111. The trained interpolation prediction model 131_1 predicts a first characteristic value (first output data) in response to input of the input data of the prediction target (design condition x), thereby outputting the first characteristic value to the output portion 132.

The trained extrapolation prediction model 131_2 is generated through training of the extrapolation prediction model 121_2 by the training device 120 using the training data set 111. The trained extrapolation prediction model 131_2 predicts a second characteristic value (second output data) in response to input of the design condition x, thereby outputting the second characteristic value to the output portion 132.

Based on the first characteristic value predicted by the trained interpolation prediction model 131_1 and on the second characteristic value predicted by the trained extrapolation prediction model 131_2, the output portion 132 determines a characteristic value y for the design condition x and outputs the characteristic value y as the prediction data.

Note that, the output portion 132 calculates the weighted average value of the first characteristic value and the second characteristic value, thereby determining the characteristic value y. Alternatively, the output portion 132 takes the weighted majority between the first characteristic value and the second characteristic value, thereby determining the characteristic value y.

Note that, in the present embodiment, the weight used when the output portion 132 calculates the weighted average value or the weight used when the output portion 132 takes the weighted majority is optimized in advance.

For example, when the design condition x is a continuous value, the output portion 132 calculates an average value of the first characteristic value and the second characteristic value (i.e., the weight of the first characteristic value = 0.5 and the weight of the second characteristic value = 0.5 are used). Alternatively, the output portion 132 calculates a weighted average value of the first characteristic value and the second characteristic value (e.g., the weight of the first characteristic value = 0.2 and the weight of the second characteristic value = 0.8 are used).

Also, when the design condition x is a discrete value, the output portion 132 takes a majority of the first characteristic value and the second characteristic value (i.e., the weight of the first characteristic value = 0.5 and the weight of the second characteristic value = 0.5 are used). Alternatively, the output portion 132 takes a weighted majority of the first characteristic value and the second characteristic value (e.g., the weight of the first characteristic value = 0.2 and the weight of the second characteristic value = 0.8 are used).

In this way, the prediction device 130 outputs the prediction data under an optimized weight using the trained interpolation prediction model suitable for the input data of the interpolation region and the trained extrapolation prediction model suitable for the input data of the extrapolation region.

Thereby, according to the prediction device 130, it is possible to obtain a certain degree of prediction accuracy for the input data of the interpolation region, and also becomes possible to obtain sufficient prediction accuracy for the input data of the extrapolation region. That is, according to the present embodiment, it is possible to increase the prediction accuracy in the prediction device using the trained prediction model.

### <Hardware configurations of training device and prediction device>

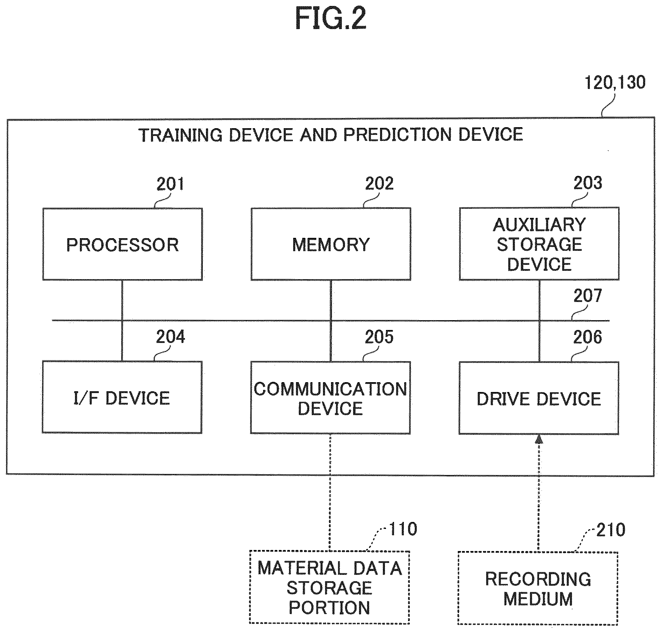

Next, the hardware configurations of the training device 120 and the prediction device 130 will be described. Note that, since the training device 120 and the prediction device 130 have similar hardware configurations, here, the hardware configurations of the training device 120 and the prediction device 130 will be collectively described using FIG. 2.

FIG. 2 exemplarily illustrates the hardware configurations of the training device and the prediction device. As illustrated in FIG. 2, the training device 120 and the prediction device 130 each include a processor 201, a memory 202, an auxiliary storage device 203, an I/F (Interface) device 204, a communication device 205, and a drive device 206. Note that, the hardware devices of the training device 120 or the prediction device 130 are connected to each other via a bus 207.

The processor 201 includes various arithmetic devices such as a CPU (Central Processing Unit), a GPU (Graphics Processing Unit), and the like. The processor 201 reads out various programs (e.g., a training program, a prediction program, and the like) on the memory 202 and executes the programs.

The memory 202 includes main storage devices such as a ROM (Read Only Memory) and a RAM (Random Access Memory). The processor 201 and the memory 202 form what is called a computer, and the processor 201 executes the various programs read out on the memory 202, whereby the computer realizes various functions.

The auxiliary storage device 203 stores various programs and various data used for executing the various programs by the processor 201.

The I/F device 204 is a connection device that is connected to an unillustrated external device. The communication device 205 is a communication device for communication via a network with an external device (e.g., a material data storage portion 110).

The drive device 206 is a device in which a recording medium 210 is set. As used herein, the recording medium 210 includes media that optically, electrically, or magnetically record information, such as CD-ROMs, flexible discs, magneto-optical discs, and the like. Also, the recording medium 210 may include, for example, semiconductor memories that electrically record information, such as ROMs and flash memories.

Note that, the various programs to be installed to the auxiliary storage device 203 are installed by, for example, setting the recording medium 210 delivered in the drive device 206 and reading out the various programs stored in the recording medium 210, by the drive device 206. Alternatively, the various programs to be installed to the auxiliary storage device 203 may be installed by downloading the programs from a network via the communication device 205.

### <Flow of training process and prediction process>

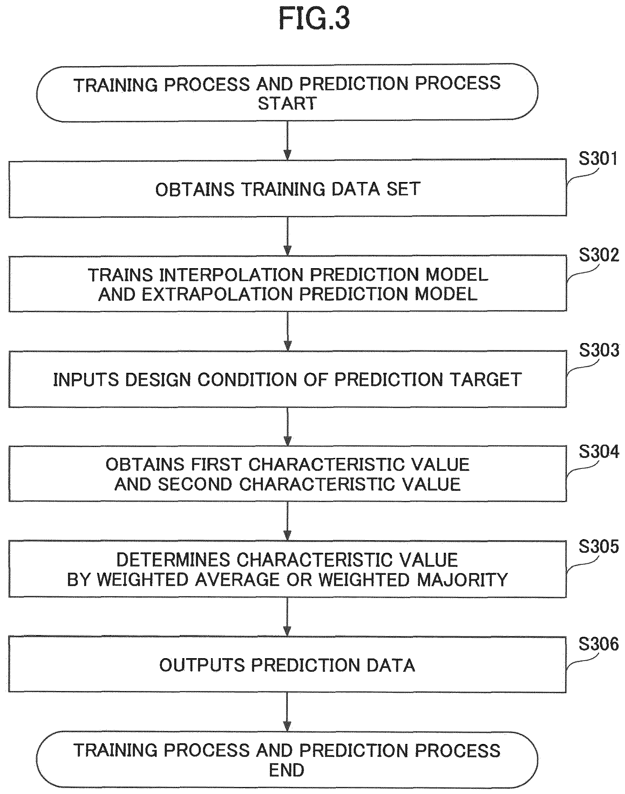

Next, the flow of the training process and the prediction process will be described. FIG. 3 is a first flowchart illustrating the flow of the training process and the prediction process.

In step S301, the training device 120 obtains the training data set 111.

In step S302, the training device 120 uses the obtained training data set 111 and trains the interpolation prediction model 121_1 and the extrapolation prediction model 121_2, thereby generating the trained interpolation prediction model 131_1 and the trained extrapolation prediction model 131_2.

In step S303, the prediction device 130 inputs the input data of the prediction target (design condition x) to the trained interpolation prediction model 131_1 and the trained extrapolation prediction model 131_2.

In step S304, the prediction device 130 obtains the first characteristic value and the second characteristic value that are respectively predicted by the trained interpolation prediction model 131_1 and the trained extrapolation prediction model 131_2.

In step S305, the prediction device 130 calculates the weighted average value of or takes the weighted majority of the first characteristic value and the second characteristic value that have been obtained, thereby determining the characteristic value.

In step S306, the prediction device 130 outputs the determined characteristic value as the prediction data for the input data of the prediction target (design condition x).

### <Summary>

As is clear from the above description, the prediction device 130 according to the first embodiment includes
- the trained interpolation prediction model suitable for the input data of the interpolation region, and the trained extrapolation prediction model suitable for the input data of the extrapolation region, and outputs
- the prediction data by calculating, under the optimized weight, the weighted average value of or taking the weighted majority of the first characteristic value predicted by the trained interpolation prediction model and the second characteristic value predicted by the trained extrapolation prediction model.

Thereby, according to the prediction device 130 according to the first embodiment, it is possible to obtain a certain degree of prediction accuracy for the input data of the interpolation region, and also becomes possible to obtain sufficient prediction accuracy for the input data of the extrapolation region. That is, according to the first embodiment, it is possible to increase the prediction accuracy in the prediction device using the trained prediction model.

### [Second embodiment]

In the first embodiment, the weight used for calculating the weighted average value or the weight used for taking the weighted majority is optimized in advance. Meanwhile, in the second embodiment, the weight used for calculating the weighted average value or the weight used for taking the weighted majority is optimized in advance for each of the input data of the prediction target, and the prediction device switches between different weights in accordance with the input data of the prediction target. Hereinafter, differences of the second embodiment from the first embodiment will be mainly described.

### <Functional configuration of prediction device>

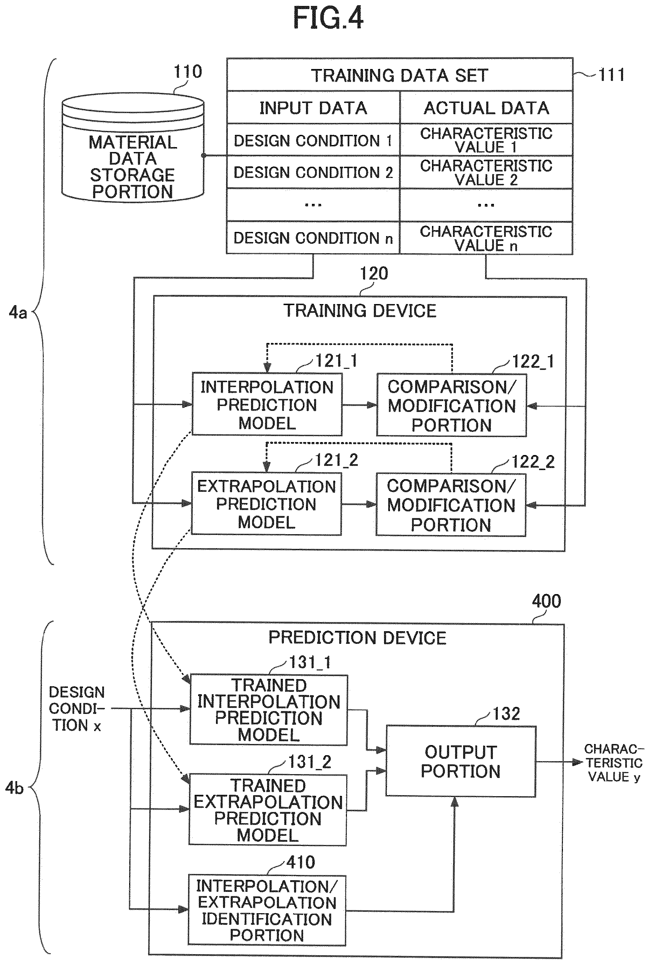

First, the functional configuration of the prediction device according to the second embodiment will be described using FIG. 4. FIG. 4 is a second diagram exemplarily illustrating the functional configurations of the training device in the training phase and the prediction device in the prediction phase. The difference of FIG. 4 from FIG. 1 is that the functional configuration of a prediction device 400 includes an interpolation/extrapolation identification portion 410 (see 4b of FIG. 4).

The interpolation/extrapolation identification portion 410 identifies whether the input data of the prediction target (design condition x) are the input data of the interpolation region or the input data of the extrapolation region. Also, the interpolation/extrapolation identification portion 410 sets a weight in accordance with an identification result (a weight for the interpolation region, a weight for the extrapolation region) for the output portion 132.

In the interpolation/extrapolation identification portion 410, for example, when the input data of the prediction target (design condition x) are identified as the input data of the interpolation region, the weight for the interpolation region is set for the output portion 132, as follows: the weight of the first characteristic value = 0.8 and the weight of the second characteristic value = 0.2. Alternatively, in the interpolation/extrapolation identification portion 410, for example, the weight for the interpolation region may be set for the output portion 132, as follows: the weight of the first characteristic value = 1.0 and the weight of the second characteristic value = 0.0.

Also, in the interpolation/extrapolation identification portion 410, for example, when the input data of the prediction target (design condition x) are identified as the input data of the extrapolation region, the weight for the extrapolation region is set for the output portion 132, as follows: the weight of the first characteristic value = 0.3 and the weight of the second characteristic value = 0.7. Alternatively, in the interpolation/extrapolation identification portion 410, for example, the weight for the extrapolation region may be set for the output portion 132, as follows: the weight of the first characteristic value = 0.0 and the weight of the second characteristic value = 1.0.

Note that, the weight to be set for the output portion 132 (the weight for the interpolation region and the weight for the extrapolation region) may be any weight. Also, the method for identifying the input data by the interpolation/extrapolation identification portion 410 may also be any method.

For example, a one-class support vector machine may be trained in advance using the training data set 111, and the interpolation/extrapolation identification portion 410 may perform the identification by inputting the input data of the prediction target to the trained one-class support vector machine. In this case, the interpolation/extrapolation identification portion 410 identifies that the input data of the prediction target are the input data of the extrapolation region when the input data of the prediction target have been determined as an outlier. Also, the interpolation/extrapolation identification portion 410 identifies that the input data of the prediction target are the input data of the interpolation region when the input data of the prediction target have not been determined as an outlier.

Alternatively, the interpolation/extrapolation identification portion 410 may identify whether the input data of the prediction target are the input data of the interpolation region by predefining the interpolation region from the training data set 111 using a local outlier factor method.

Alternatively, the interpolation/extrapolation identification portion 410 may identify whether the input data of the prediction target are the input data of the interpolation region by predefining the interpolation region from the training data set 111 using a Gaussian mixture model.

Alternatively, the interpolation/extrapolation identification portion 410 may identify whether the input data of the prediction target are the input data of the interpolation region by predefining the interpolation region from the training data set 111 using an isolation forest.

### <Flow of training process and prediction process>

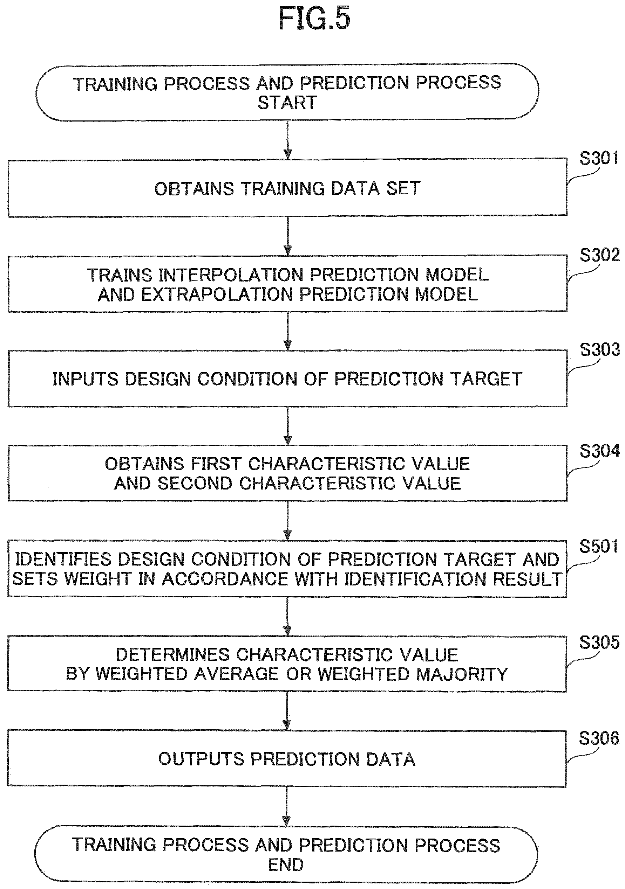

Next, the flow of the training process and the prediction process will be described. FIG. 5 is a second flowchart illustrating the flow of the training process and the prediction process. The difference from the first flowchart described using FIG. 3 is step S501.

In step S501, the prediction device 400 identifies whether the input data of the prediction target (design condition x) are the input data of the interpolation region or the input data of the extrapolation region. Also, the prediction device 400 sets a weight in accordance with an identification result (a weight for the interpolation region, a weight for the extrapolation region).

### <Summary>

As is clear from the above description, the prediction device 400 according to the second embodiment includes, in addition to the function of the prediction device 130 according to the first embodiment,
- the function of identifying whether the input data of the prediction target are the input data of the interpolation region or the input data of the extrapolation region, and setting the weight in accordance with the identification result (the weight for the interpolation region, the weight for the extrapolation region), and
- the function of using the weight in accordance with the identification result for calculating the weighted average value of or taking the weighted majority of the first characteristic value and the second characteristic value in order to output the prediction data.

Thereby, according to the prediction device 130 according to the second embodiment, it is possible to obtain a certain degree of prediction accuracy for the input data of the interpolation region, and also becomes possible to obtain sufficient prediction accuracy for the input data of the extrapolation region. That is, according to the second embodiment, it is possible to increase the prediction accuracy in the prediction device using the trained prediction model.

### [Third embodiment]

In the second embodiment, it is identified whether the input data of the prediction target are the input data of the interpolation region or the input data of the extrapolation region, and the prediction data is output using the weight in accordance with the identification result (the weight for the interpolation region, the weight for the extrapolation region).

Meanwhile, in the third embodiment, the magnitude of extrapolation (a continuous value) of the input data of the prediction target is evaluated, and the prediction data are output under a weight in accordance with an evaluation result. Hereinafter, the differences of the third embodiment from the second embodiment will be mainly described.

### <Functional configuration of prediction device>

In the prediction device 400 according to the third embodiment, the magnitude of extrapolation of the input data of the prediction target is evaluated instead of the interpolation/extrapolation identification portion 410 of FIG. 4 identifying whether the input data of the prediction target are the input data of the interpolation region or the input data of the extrapolation region. Also, in the prediction device 400 according to the third embodiment, a weight in accordance with an evaluation result is set for the output portion 132 instead of the interpolation/extrapolation identification portion 410 of FIG. 4 setting the weight in accordance with the identification result (the weight for the interpolation region, the weight for the extrapolation region).

Specifically, in the case of the prediction device 400 according to the third embodiment, the interpolation/extrapolation identification portion 410, for example, continuously changes the weight based on the magnitude of extrapolation of the input data of the prediction target (design condition x). Continuously changing the weight refers to continuously changing the weight between (the weight of the first characteristic value = 1.0, the weight of the second characteristic value = 0.0) and (the weight of the first characteristic value = 0.0, the weight of the second characteristic value = 1.0) in accordance with the evaluation result in increments of, for example, 0.1.

Note that, the method for evaluating the magnitude of extrapolation of the input data by the interpolation/extrapolation identification portion 410 may be any method. One example thereof is an evaluation method by Kernel density estimation. Specifically, the interpolation/extrapolation identification portion 410, first, uses the training data set 111 to construct a Kernel density estimation model, and estimates the density of the input data included in the training data set 111. Subsequently, the interpolation/extrapolation identification portion 410 uses the constructed Kernel density estimation model to estimate the density of the input data of the prediction target (design condition x). Then, in the interpolation/extrapolation identification portion 410, the density of the input data included in the training data set 111 and the density of the input data of the prediction target (design condition x) are compared with each other, thereby evaluating the magnitude of extrapolation relative to the input data of the prediction target (design condition x).

Alternatively, another example is an evaluation method by distance. Specifically, the interpolation/extrapolation identification portion 410, first, extracts an α number of input data close in distance to the input data of the prediction target (design condition x) from among the input data included in the training data set 111. Note that, as used herein, α is a value that is determined by the number of the input data included in the training data set 111. Subsequently, the interpolation/extrapolation identification portion 410 calculates an average value of the distances between the extracted α number of input data and the input data of the prediction target (design condition x). Then, the interpolation/extrapolation identification portion 410 evaluates the magnitude of extrapolation from the calculated average value of the distances.

Alternatively, another example is an evaluation method by uncertainty of random forest prediction. Specifically, the interpolation/extrapolation identification portion 410, first, uses the training data set 111 to construct a prediction model based on a random forest, and calculates a standard deviation of a distribution of estimated values of each tree when the input data of the prediction target (design condition x) are input. Then, the interpolation/extrapolation identification portion 410 evaluates the magnitude of extrapolation from the calculated standard deviation.

Alternatively, another example is an evaluation method by uncertainty of Bayesian estimation. Specifically, the interpolation/extrapolation identification portion 410 uses the training data set 111 to construct a prediction model based on a Bayesian neural network employing a variational Bayesian method or a Markov chain Monte Carlo method, or on a Gaussian process that is nonparametric Bayes. Subsequently, the interpolation/extrapolation identification portion 410 calculates a standard deviation of a distribution of estimated values when the input data of the prediction target (design condition x) are input to the constructed Bayesian neural network or Gaussian process. Then, the interpolation/extrapolation identification portion 410 evaluates the magnitude of extrapolation from the calculated standard deviation.

### <Summary>

As is clear from the above description, the prediction device 400 according to the third embodiment includes, in addition to the function of the prediction device 130 according to the first embodiment,
- the function of evaluating the magnitude of extrapolation of the input data of the prediction target and setting the weight in accordance with the evaluation result, and
- the function of using the weight in accordance with the identification result for calculating the weighted average value of or taking the weighted majority of the first characteristic value and the second characteristic value in order to output the prediction data.

Thereby, according to the prediction device 400 according to the third embodiment, it is possible to obtain a certain degree of prediction accuracy for the input data of the interpolation region, and also becomes possible to obtain sufficient prediction accuracy for the input data of the extrapolation region. That is, according to the third embodiment, it is possible to increase the prediction accuracy in the prediction device using the trained prediction model.

### [Fourth embodiment]

In the first and second embodiments, when the prediction devices 130 and 400 perform the prediction process, the weight optimized in advance (or the weight optimized in advance in accordance with the identification result or the evaluation result of the input data of the prediction target) is set for the output portion 132. Meanwhile, in the fourth embodiment, a method for optimizing the weight to be set for the output portion 132 will be described.

### <Functional configuration of training device in optimization phase, Part 1>

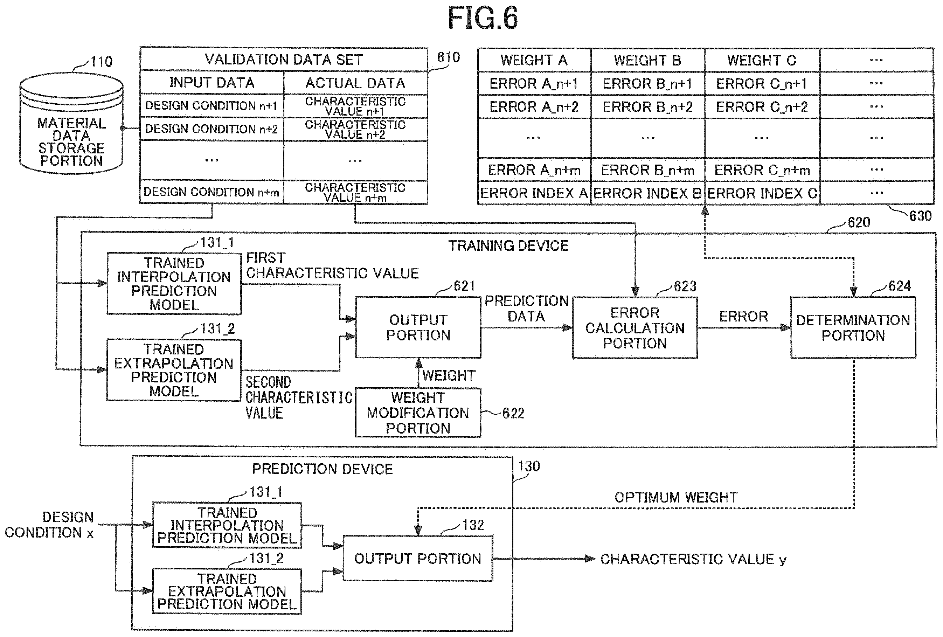

First, the functional configuration of the training device in the optimization phase that optimizes the weight to be set for the output portion 132 (FIG. 1) of the prediction device 130 will be described. FIG. 6 is a first diagram exemplarily illustrating the functional configuration of the training device in the optimization phase. As illustrated in FIG. 6, a training device 620 in the optimization phase functions as
- the trained interpolation prediction model 131_1,
- the trained extrapolation prediction model 131_2,
- an output portion 621,
- a weight modification portion 622,
- an error calculation portion 623, and
- a determination portion 624.

The training device 620 optimizes the weight to be set for the output portion 132 of the prediction device 130 using a validation data set 610 stored in the material data storage portion 110.

As illustrated in FIG. 6, the validation data set 610 includes "input data" and "actual data" as items of information. Note that, the example of FIG. 6 illustrates "design condition n+1" to "design condition n+m" stored as "input data", and "characteristic value n+1" to "characteristic value n+m" stored as "actual data". In this way, for optimization of the weight, the training device 620 uses the validation data set 610, which is different from the training data set 111 used for training of the interpolation prediction model 121_1 and the extrapolation prediction model 121_2.

The trained interpolation prediction model 131_1 and the trained extrapolation prediction model 131_2 are the same as the trained interpolation prediction model 131_1 and the trained extrapolation prediction model 131_2 that are described using FIG. 1 in the first embodiment.

However, in the case of the fourth embodiment, "design condition n+1" to "design condition n+m" stored in "input data" of the validation data set 610 are sequentially input to the trained interpolation prediction model 131_1 and the trained extrapolation prediction model 131_2. Thereby, the trained interpolation prediction model 131_1 and the trained extrapolation prediction model 131_2 sequentially predict the first characteristic value and the second characteristic value.

Under a weight modified by the weight modification portion 622, the output portion 621 sequentially outputs prediction data based on the first characteristic value and the second characteristic value. For example, the output portion 621 sequentially outputs a plurality of prediction data under a plurality of types of weights for the first characteristic value and the second characteristic value that are predicted in response to input of "design condition n+1" to the trained interpolation prediction model 131_1 and the trained extrapolation prediction model 131_2. Likewise, the output portion 621 sequentially outputs a plurality of prediction data under a plurality of types of weights for the first characteristic value and the second characteristic value that are predicted in response to input of "design condition n+2" to the trained interpolation prediction model 131_1 and the trained extrapolation prediction model 131_2.

The weight modification portion 622 sets the weight used when the output portion 621 sequentially outputs the prediction data. The weight modification portion 622 sets the plurality of types of weights while modifying the weight between (the weight of the first characteristic value = 1.0, the weight of the second characteristic value = 0.0) and (the weight of the first characteristic value = 0.0, the weight of the second characteristic value = 1.0) in increments of, for example, 0.1.

The error calculation portion 623 calculates an error between the plurality of prediction data sequentially output by the output portion 621 and any one of "characteristic value n+1" to "characteristic value n+m" stored in "actual data" of the validation data set 610, thereby outputting the error to the determination portion 624.

The determination portion 624 determines an optimum weight by referring to a table 630 storing the calculated errors.

Note that, in FIG. 6, the table 630 is a list of the errors calculated by the error calculation portion 623. In the table 630,
- Weight A = (the weight of the first characteristic value = 1.0, the weight of the second characteristic value = 0.0),
- Weight B = (the weight of the first characteristic value = 0.9, the weight of the second characteristic value = 0.1),
- Weight C = (the weight of the first characteristic value = 0.8, the weight of the second characteristic value = 0.2),

Also, in the table 630,
- Error A_n+1 refers to an error between characteristic value n+1 that is actual data and prediction data output by the output portion 621 under the Weight A based on the first characteristic value and the second characteristic value that have been obtained in response to input of the design condition n+1,
- Error B_n+1 refers to an error between characteristic value n+1 that is actual data and prediction data output by the output portion 621 under the Weight B based on the first characteristic value and the second characteristic value that have been obtained in response to input of the design condition n+1,
- Error C_n+1 refers to an error between characteristic value n+1 that is actual data and prediction data output by the output portion 621 under the Weight C based on the first characteristic value and the second characteristic value that have been obtained in response to input of the design condition n+1,

- Error A_n+2 refers to an error between characteristic value n+2 that is actual data and prediction data output by the output portion 621 under the Weight A based on the first characteristic value and the second characteristic value that have been obtained in response to input of the design condition n+2,
- Error B_n+2 refers to an error between characteristic value n+2 that is actual data and prediction data output by the output portion 621 under the Weight B based on the first characteristic value and the second characteristic value that have been obtained in response to input of the design condition n+2,
- Error C_n+2 refers to an error between characteristic value n+2 that is actual data and prediction data output by the output portion 621 under the Weight C based on the first characteristic value and the second characteristic value that have been obtained in response to input of the design condition n+2,
- Error A_n+m refers to an error between characteristic value n+m that is actual data and prediction data output by the output portion 621 under the Weight A based on the first characteristic value and the second characteristic value that have been obtained in response to input of the design condition n+m,
- Error B_n+m refers to an error between characteristic value n+m that is actual data and prediction data output by the output portion 621 under the Weight B based on the first characteristic value and the second characteristic value that have been obtained in response to input of the design condition n+m, and
- Error C_n+m refers to an error between characteristic value n+m that is actual data and prediction data output by the output portion 621 under the Weight C based on the first characteristic value and the second characteristic value that have been obtained in response to input of the design condition n+m.

Also, in the table 820,
- Error Index A refers to a statistical value of Error A_n+1 to Error A_n+m (e.g., an average value),
- Error Index B refers to a statistical value of Error B_n+1 to Error B_n+m (e.g., an average value), and
- Error Index C refers to a statistical value of Error C_n+1 to Error C_n+m (e.g., an average value).

The determination portion 624, for example, identifies the minimum value from among Error Index A, Error Index B, Error Index C, ... and determines the corresponding weight as the optimum weight. Also, the determination portion 624 sets the determined weight for the output portion 132 of the prediction device 130.

Thereby, the prediction device 130 can perform the prediction process under the optimized weight.

### <Functional configuration of training device in optimization phase, Part 2>

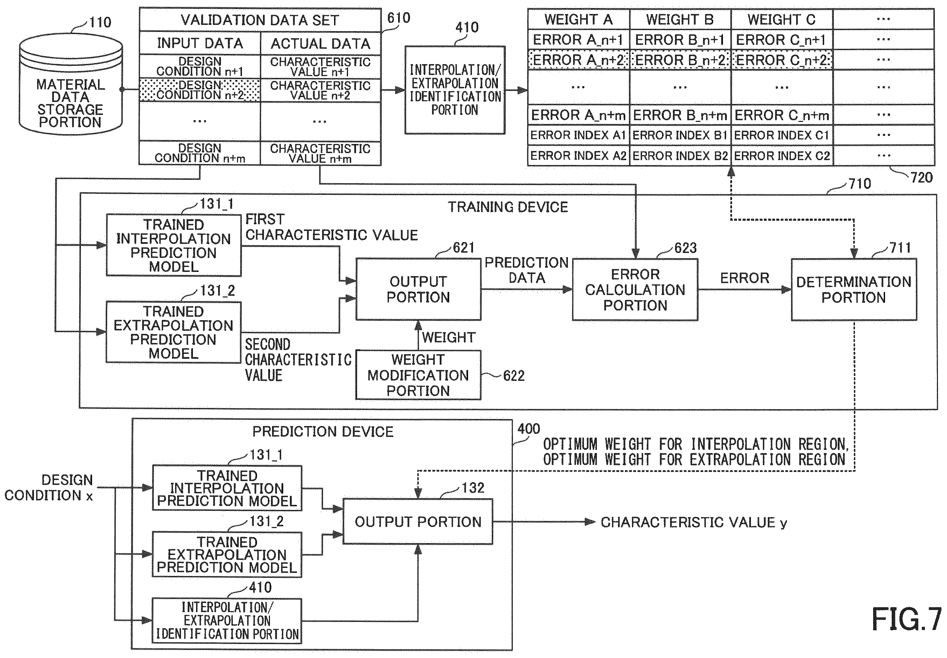

Next, the functional configuration of the training device in the optimization phase that optimizes the weight to be set for the output portion 132 (FIG. 4) of the prediction device 400 in accordance with the identification result of the input data of the prediction target will be described. FIG. 7 is a second diagram exemplarily illustrating the functional configuration of the training device in the optimization phase. The difference from the functional configuration of the training device 620 as illustrated in FIG. 6 is that the function of the determination portion 711 of the training device 710 is different from the function of the determination portion 624 of the training device 620.

By referring to a table 720 of FIG. 7, the determination portion 711 determines an optimum weight for the interpolation region and an optimum weight for the extrapolation region.

Note that, in the table 720, the errors in the hatched cells (e.g., Error A_n+2, Error B_n+2, Error C_n+2, ...) show errors corresponding to the input data of the extrapolation region.

However, whether the input data of the validation data set 610 (design condition n+1, n+2, ... n+m) are the input data of the interpolation region or the input data of the extrapolation region is identified in advance by, for example, the interpolation/extrapolation identification portion 410. Note that, the interpolation/extrapolation identification portion 410 here is the same as the interpolation/extrapolation identification portion 410 of FIG. 4.

Also, in the table 720,
- Error Index A1 refers to a statistical value (e.g., an average value) of the errors corresponding to the input data of the interpolation region among Error A_n+1 to Error A_n+m (the errors not in the hatched cells (e.g., Errors A_n+1, A_n+m)),
- Error Index A2 refers to a statistical value (e.g., an average value) of the errors corresponding to the input data of the extrapolation region among Error A_n+1 to Error A_n+m (the errors in the hatched cells (e.g., Error A_n+2)),
- Error Index B1 refers to a statistical value (e.g., an average value) of the errors corresponding to the input data of the interpolation region among Error B_n+1 to Error B_n+m (the errors not in the hatched cells (e.g., Errors B_n+1, B_n+m)),
- Error Index B2 refers to a statistical value (e.g., an average value) of the errors corresponding to the input data of the extrapolation region among Error B_n+1 to Error B_n+m (the errors in the hatched cells (e.g., Error B_n+2)),
- Error Index C1 refers to a statistical value (e.g., an average value) of the errors corresponding to the input data of the interpolation region among Error C_n+1 to Error C_n+m (the errors not in the hatched cells (e.g., Errors C_n+1, C_n+m)), and
- Error Index C2 refers to a statistical value (e.g., an average value) of the errors corresponding to the input data of the extrapolation region among Error C_n+1 to Error C_n+m (the errors in the hatched cells (e.g., Error C_n+2)).

The determination portion 711 identifies the minimum value from among Error Index A1, Error Index B1, Error Index C1, ... and determines the corresponding weight as the optimum weight for the interpolation region. Also, the determination portion 711 notifies to the prediction device 400 so that the determined optimum weight for the interpolation region is set for the output portion 132 of the prediction device 400.

Likewise, the determination portion 711 identifies the minimum value from among Error Index A2, Error Index B2, Error Index C2, ... and determines the corresponding weight as the optimum weight for the extrapolation region. Also, the determination portion 711 notifies to the prediction device 400 so that the determined optimum weight for the extrapolation region is set for the output portion 132 of the prediction device 400.

### <Flow of training process and prediction process>

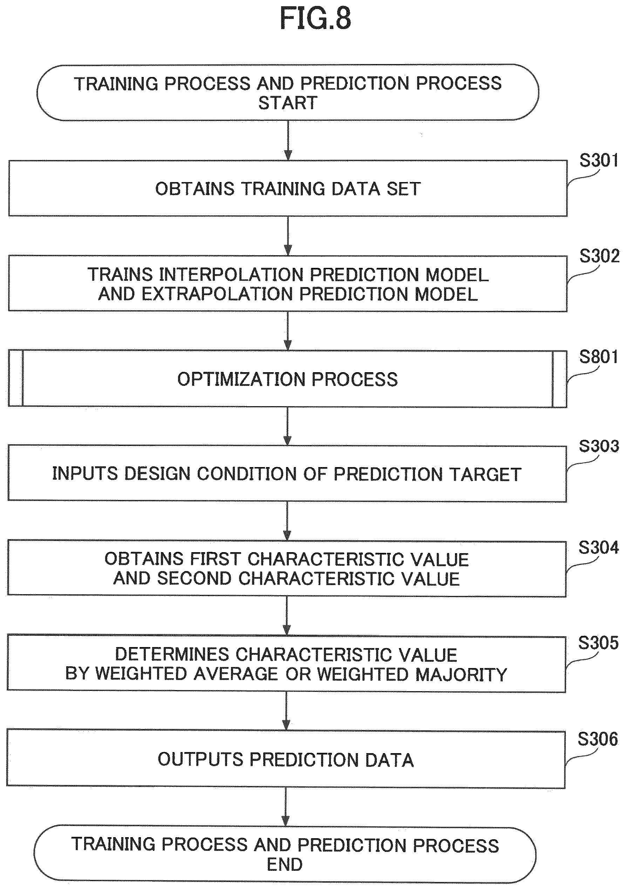

Next, the flow of the training process and the prediction process will be described. FIG. 8 is a third flowchart illustrating the flow of the training process and the prediction process. The difference from the first flowchart described using FIG. 1 is step S801.

In step S801, the training device 120 executes an optimization process that optimizes the weight (or the weight for each of the input data of the prediction target) to be set for the output portion 132 of the prediction device 130 (or the output portion 132 of the prediction device 400). Note that, details of the optimization process (step S801) will be described below.

<Flow of optimization process>

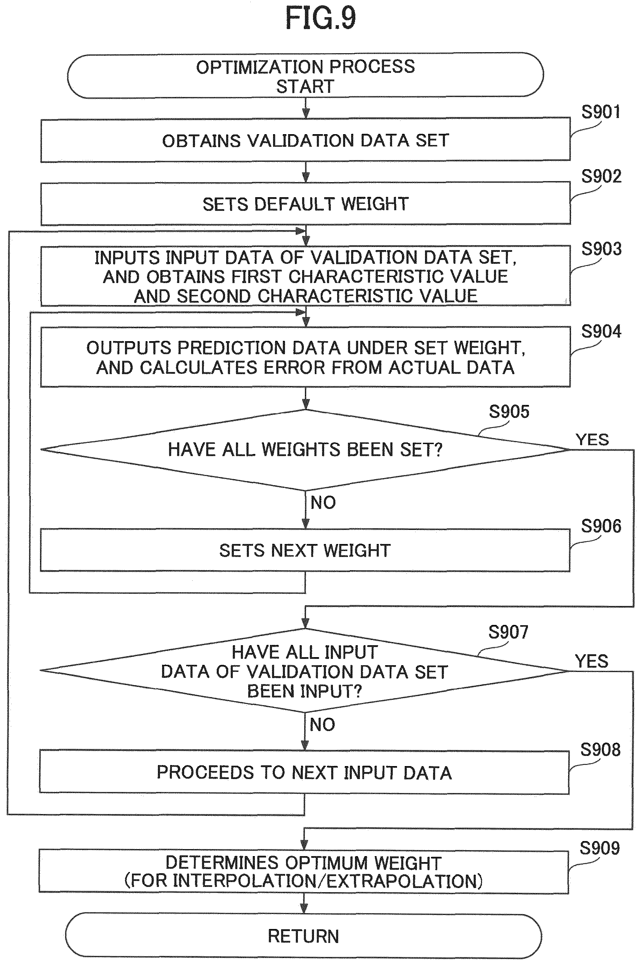

FIG. 9 is a first flowchart illustrating the flow of the optimization process. In step S901, the training device 120 obtains a validation data set.

In step S902, the training device 120 sets a default weight from a plurality of types of weights.

In step S903, the training device 120 inputs the input data of the validation data set to each of the trained interpolation prediction model and the trained extrapolation prediction model, thereby obtaining the first characteristic value and the second characteristic value.

In step S904, the training device 120 outputs the prediction data under the set weight based on the first characteristic value and the second characteristic value that have been obtained. Also, the training device 120 calculates an error between the prediction data and the corresponding actual data of the validation data set.

In step S905, the training device 120 determines whether all of the plurality of types of weights have been set. In step S905, when it is determined that there is an unset weight (in the case of "NO" in step S905), the process proceeds to step S906.

In step S906, the training device 120 sets the next, unset weight, and the process returns to step S904.

Meanwhile, in step S905, when it is determined that all of the weights have been set (in the case of "YES" in step S905), the process proceeds to step S907.

In step S907, the training device 120 determines whether all of the input data of the validation data set have been input to each of the trained interpolation prediction model and the trained extrapolation prediction model. In step S907, when it is determined that there are input data that have not been input (in the case of "NO" in step S907), the process proceeds to step S908.

In step S908, the training device 120 sets the next input data of the validation data set as a target for the process, and the process returns to step S903.

Meanwhile, in step S907, when it is determined that all of the input data have been input (in the case of "YES" in step S907), the process proceeds to step S909.

In step S909, the training device 120 calculates an error index for each of the set weights (or for each of the set weights and for the interpolation/extrapolation). Also, the training device 120 determines the weight in which the calculated error index becomes minimum, as the optimum weight (or the optimum weight for the interpolation region, the optimum weight for extrapolation region).

### <Summary>

As is clear from the above description, the training devices 620 and 710 according to the fourth embodiment include
- the trained interpolation prediction model suitable for the input data of the interpolation region and the trained extrapolation prediction model suitable for the input data of the extrapolation region, and predict
- the first characteristic value and the second characteristic value by inputting the input data of the validation data set to each of the trained interpolation prediction model and the trained extrapolation prediction model, and output
- respective prediction data under the plurality of types of weights based on the first characteristic value and the second characteristic value that have been predicted, and calculate an error from the actual data, thereby calculating an error index for each of the weights, and identify
- the weight corresponding to the minimum error index (or the minimum error index for each of the input data of the interpolation region/the input data of the extrapolation region) and determine that weight as the optimum weight (or the optimum weight for the interpolation region, the optimum weight for the extrapolation region).

Thereby, according to the prediction device 400 according to the fourth embodiment, it is possible to obtain a certain degree of prediction accuracy for the input data of the interpolation region, and also becomes possible to obtain sufficient prediction accuracy for the input data of the extrapolation region. That is, according to the fourth embodiment, it is possible to increase the prediction accuracy in the prediction device using the trained prediction model.

### [Fifth embodiment]

In the fourth embodiment, the weight is optimized using the trained interpolation prediction model and the trained extrapolation prediction model that have been trained with a specific hyperparameter being set.

Meanwhile, in the fifth embodiment, the hyperparameter is optimized together with the optimization of the weight. Hereinafter, the differences of the fifth embodiment from the first and fourth embodiments will be mainly described.

### <Functional configuration of training device in training phase>

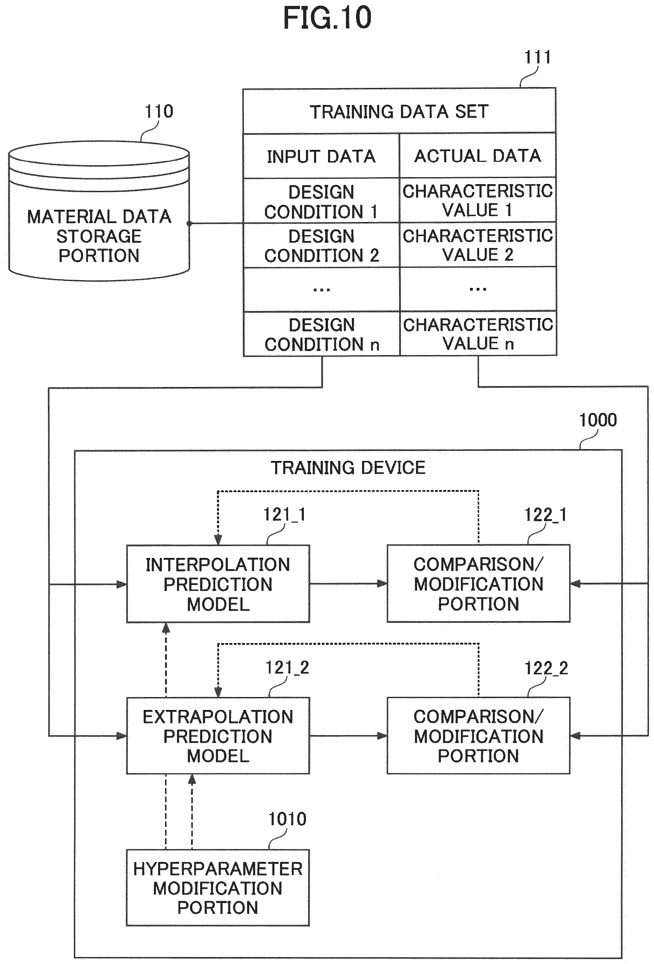

First, the functional configuration of the training device according to the fifth embodiment in the training phase will be described. FIG. 10 is a third diagram exemplarily illustrating the functional configuration of the training device in the training phase. The difference from the functional configuration described using 1a of FIG. 1 is that a training device 1000 includes a hyperparameter modification portion 1010.

The hyperparameter modification portion 1010 modifies the hyperparameter for the interpolation prediction model to be set for the interpolation prediction model 121_1. Also, the hyperparameter modification portion 1010 modifies the hyperparameter for the extrapolation prediction model to be set for the extrapolation prediction model 121_2.

Thereby, the training device 1000 trains the interpolation prediction model 121_1 and the extrapolation prediction model 121_2 using the training data set 111 every time the hyperparameter is modified. As a result, the training device 1000 generates a plurality of trained interpolation prediction models and a plurality of trained extrapolation prediction models.

### <Functional configuration of training device in optimization phase>

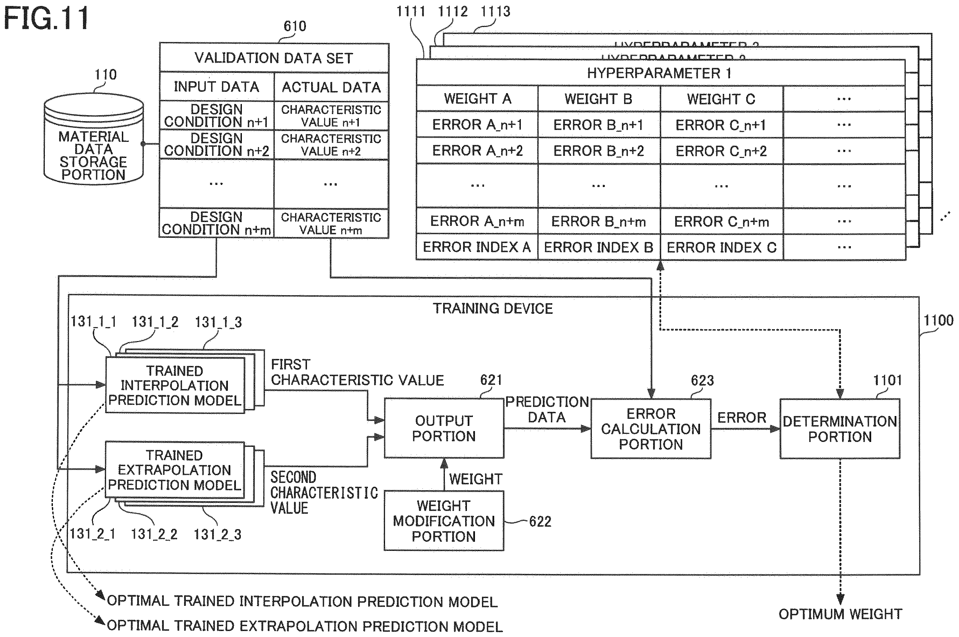

Next, the functional configuration of the training device according to the fifth embodiment in the optimization phase will be described. FIG. 11 is a third diagram exemplarily illustrating the functional configuration of the training device in the optimization phase. As illustrated in FIG. 11, in the optimization phase, the training device 1100 functions as
- trained interpolation prediction models 131_1_1, 131_1_2, 131_1_3, ...,
- trained extrapolation prediction models 131_2_1, 131_2_2, 131_2_3, ...,
- the output portion 621,
- the weight modification portion 622,
- the error calculation portion 623, and
- a determination portion 1101.

The training device 1100 uses the validation data set 610 stored in the material data storage portion 110, thereby optimizing the trained interpolation prediction model and the trained extrapolation prediction model that are to be applied to the prediction device 130, and also optimizing the weight to be set for the output portion 132.

The trained interpolation prediction models 131_1_1, 131_1_2, 131_1_3, ... are a plurality of trained interpolation prediction models that have been generated through training using the training data set 111 in the training phase every time the hyperparameter is modified.

The trained extrapolation prediction models 131_2_1, 131_2_2, 131_2_3, ... are a plurality of trained extrapolation prediction models that have been generated through training using the training data set 111 in the training phase every time the hyperparameter is modified.

The input data of the validation data set 610 are sequentially input to the trained interpolation prediction models 131_1_1, 131_1_2, 131_1_3, ... and the trained extrapolation prediction models 131_2_1, 131_2_2, 131_2_3, .... Also, the trained interpolation prediction models 131_1_1, 131_1_2, 131_1_3, ... and the trained extrapolation prediction models 131_2_1, 131_2_2, 131_2_3, ... sequentially predict a plurality of first characteristic values and a plurality of second characteristic values, respectively.

Under the weight that has been modified by the weight modification portion 622, the output portion 621 outputs prediction data based on the first characteristic value and the second characteristic value. For example, the output portion 621 sequentially outputs a plurality of prediction data under a plurality of types of weights for the first and second characteristic values that are predicted in response to input of "design condition n+1" to the trained interpolation prediction model 131_1_1 and the trained extrapolation prediction model 131_2_1. Likewise, the output portion 621 sequentially outputs a plurality of prediction data under a plurality of types of weights for the first and second characteristic values that are predicted in response to input of "design condition n+2" to the trained interpolation prediction model 131_1_2 and the trained extrapolation prediction model 131_2_2.

The weight modification portion 622 sets the weight used when the output portion 621 sequentially outputs the prediction data. The weight modification portion 622 sets the plurality of types of weights while modifying the weight between (the weight of the first characteristic value = 1.0, the weight of the second characteristic value = 0.0) and (the weight of the first characteristic value = 0.0, the weight of the second characteristic value = 1.0) in increments of, for example, 0.1.

The error calculation portion 623 calculates an error between the plurality of prediction data sequentially output by the output portion 621 and any one of "characteristic value n+1" to "characteristic value n+m" stored in "actual data" of the validation data set 610, thereby outputting the error to the determination portion 1101.

The determination portion 1101 determines an optimum hyperparameter and an optimum weight by referring to tables 1111, 1112, 1113, ... each storing the calculated errors.

Note that, in FIG. 11, the table 1111 is a list of the errors calculated by the error calculation portion 623. In the table 1111,
- Hyperparameter 1 refers to a combination of a hyperparameter for the interpolation prediction model set for the trained interpolation prediction model 131_1_1 and a hyperparameter for the extrapolation prediction model set for the trained extrapolation prediction model 131_2_1. Also, in the table 1112,
- Hyperparameter 2 refers to a combination of a hyperparameter for the interpolation prediction model set for the trained interpolation prediction model 131_1_2 and a hyperparameter for the extrapolation prediction model set for the trained interpolation prediction model 131_1_2. Also, in the table 1113,
- Hyperparameter 3 refers to a combination of a hyperparameter for the interpolation prediction model set for the trained interpolation prediction model 131_1_3 and a hyperparameter for the extrapolation prediction model set for the trained interpolation prediction model 131_1_3.

Also, in the table 1111,
- Weight A = (the weight of the first characteristic value = 1.0, the weight of the second characteristic value = 0.0),
- Weight B = (the weight of the first characteristic value = 0.9, the weight of the second characteristic value = 0.1),
- Weight C = (the weight of the first characteristic value = 0.8, the weight of the second characteristic value = 0.2),

Also, in the table 1111,
- Error A_n+1 refers to an error between characteristic value n+1 that is actual data and prediction data output by the output portion 621 under the Weight A based on the first characteristic value and the second characteristic value that have been obtained in response to input of the design condition n+1,
- Error B_n+1 refers to an error between characteristic value n+1 that is actual data and prediction data output by the output portion 621 under the Weight B based on the first characteristic value and the second characteristic value that have been obtained in response to input of the design condition n+1,
- Error C_n+1 refers to an error between characteristic value n+1 that is actual data and prediction data output by the output portion 621 under the Weight C based on the first characteristic value and the second characteristic value that have been obtained in response to input of the design condition n+1,
- Error A_n+2 refers to an error between characteristic value n+2 that is actual data and prediction data output by the output portion 621 under the Weight A based on the first characteristic value and the second characteristic value that have been obtained in response to input of the design condition n+2,
- Error B_n+2 refers to an error between characteristic value n+2 that is actual data and prediction data output by the output portion 621 under the Weight B based on the first characteristic value and the second characteristic value that have been obtained in response to input of the design condition n+2,
- Error C_n+2 refers to an error between characteristic value n+2 that is actual data and prediction data output by the output portion 621 under the Weight C based on the first characteristic value and the second characteristic value that have been obtained in response to input of the design condition n+2,
- Error A_n+m refers to an error between characteristic value n+m that is actual data and prediction data output by the output portion 621 under the Weight A based on the first characteristic value and the second characteristic value that have been obtained in response to input of the design condition n+m,
- Error B_n+m refers to an error between characteristic value n+m that is actual data and prediction data output by the output portion 621 under the Weight B based on the first characteristic value and the second characteristic value that have been obtained in response to input of the design condition n+m, and
- Error C_n+m refers to an error between characteristic value n+m that is actual data and prediction data output by the output portion 621 under the Weight C based on the first characteristic value and the second characteristic value that have been obtained in response to input of the design condition n+m.

Also, in the table 1111,
- Error Index A refers to a statistical value of Error A_n+1 to Error A_n+m (e.g., an average value),
- Error Index B refers to a statistical value of Error B_n+1 to Error B_n+m (e.g., an average value), and
- Error Index C refers to a statistical value of Error C_n+1 to Error C_n+m (e.g., an average value).

The determination portion 1101, for example, identifies the minimum value from among Error Index A, Error Index B, Error Index C, ... for each of the Hyperparameters 1, 2, 3, .... Also, the determination portion 1101 determines the minimum value from the minimum values determined for each hyperparameter (i.e., the minimum value identified in the table 1111, the minimum value identified in the table 1112, ...).

Also, the determination portion 1101 determines the hyperparameter and the weight corresponding to the identified minimum value as an optimum hyperparameter and an optimum weight. Moreover, the determination portion 1101 notifies, to the prediction device 130, the determined optimum weight, and the optimum trained interpolation prediction model and the optimum trained extrapolation prediction model that have been generated through training with the combination indicated by the determined hyperparameter being set.

Thereby, the prediction device 130 can perform the prediction process under the optimized trained interpolation prediction model and the optimized trained extrapolation prediction model, and the optimized weight.

### <Flow of training process and prediction process>

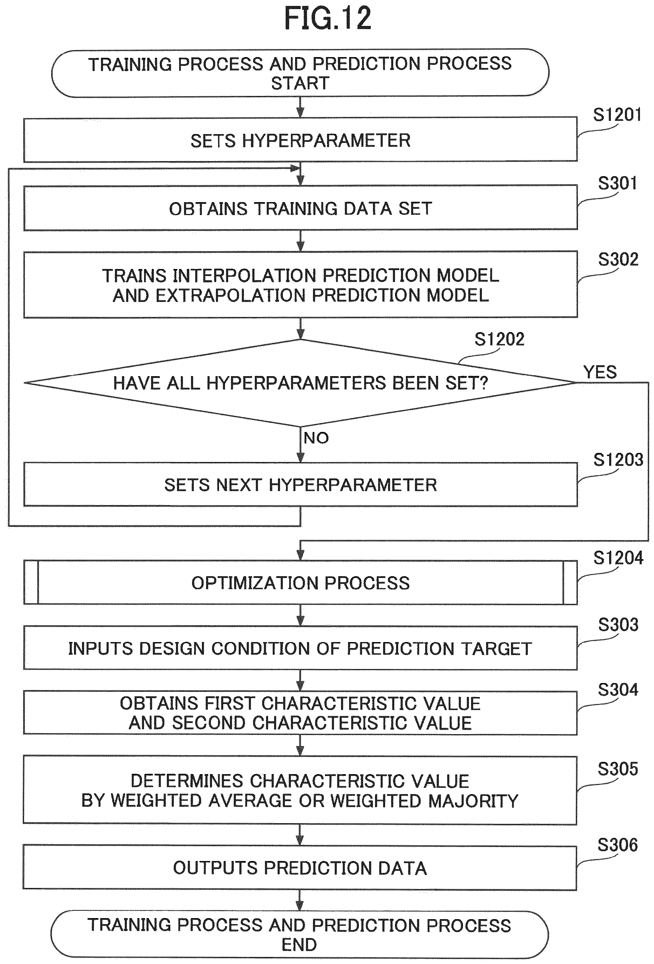

Next, the flow of the training process and the prediction process will be described. FIG. 12 is a fourth flowchart illustrating the training process and the prediction process. The differences from the first flowchart described using FIG. 1 are step S1201 and S1202 to S1204.

In step S1201, the training device 1000 sets a default hyperparameter for the interpolation prediction model from among a plurality of hyperparameters for the interpolation prediction model. Also, the training device 1000 sets a default hyperparameter for the extrapolation prediction model from among a plurality of hyperparameters for the extrapolation prediction model.

In step S1202, the training device 1000 determines whether training has been performed with all of the plurality of hyperparameters for the interpolation prediction model being set for the interpolation prediction model 121_1. Also, the training device 1000 determines whether training has been performed with all of the plurality of hyperparameters for the extrapolation prediction model being set for the extrapolation prediction model 121_2.

In step S1202, when it is determined that there is an unset hyperparameter (in the case of "NO" in step S1202), the process proceeds to step S1203.

In step S1203, the training device 1000 sets the next hyperparameter for the interpolation prediction model, for the interpolation prediction model, and sets the next hyperparameter for the extrapolation prediction model, for the extrapolation prediction model, and the process returns to step S301.

Meanwhile, in step S1202, when it is determined that all of the hyperparameters have been set (in the case of "YES" in step S1202), the process proceeds to step S1204.

In step S1204, the training device 1100 executes an optimization process that optimizes the hyperparameter and the weight. Note that, details of the optimization process that optimizes the hyperparameter and the weight (step S1204) will be described below.

### <Flow of optimization process>

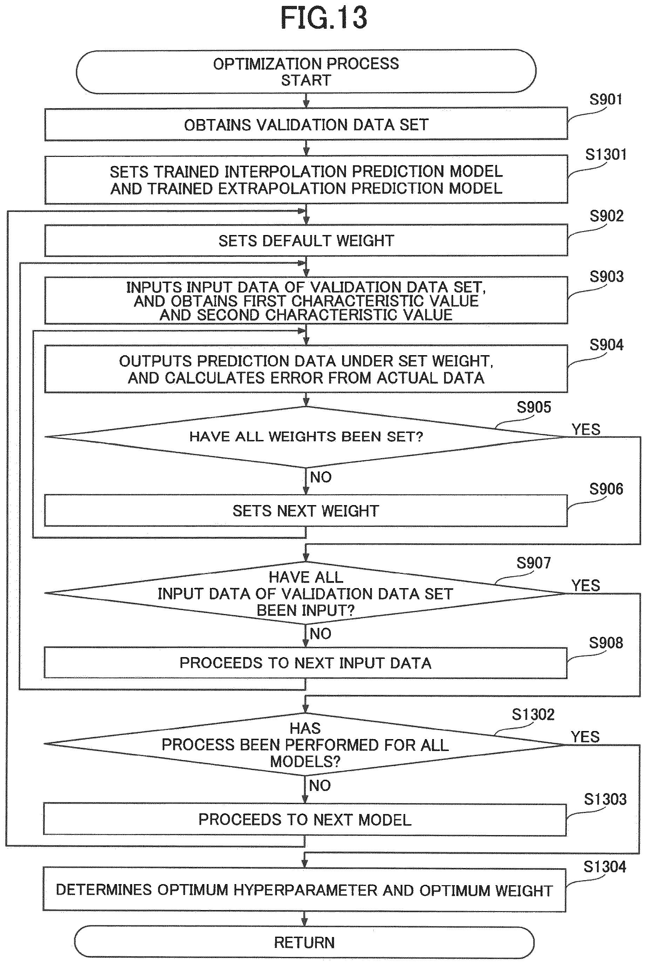

FIG. 13 is a second flowchart illustrating the flow of the optimization process. The differences from the optimization process as illustrated in FIG. 9 are steps S1301 and S1302 to S1304.

In step S1301, the training device 1100 sets a combination of a default trained interpolation prediction model and a default trained extrapolation prediction model from among a plurality of trained interpolation prediction models and a plurality of trained extrapolation prediction models that have been generated in the training phase.

In step S1302, the training device 1100 determines whether a process of steps S902 to S908 has been performed for all of the combinations of the plurality of trained interpolation prediction models and the plurality of trained extrapolation prediction models that have been generated in the training phase.

In step S1302, when it is determined that there is a combination of the trained interpolation prediction model and the trained extrapolation prediction model that has not undergone the process of steps S902 to S908 (in the case of "NO" in step S1302), the process proceeds to step S1303.

In step S1303, the training device 1100 sets a combination of the next trained interpolation prediction model and the next trained extrapolation prediction model, and the process returns to step S902.

Meanwhile, in step S1302, when it is determined that the process of steps S902 to S908 has been performed for all of the combinations (in the case of "YES" in step S1302), the process proceeds to step S1304.

In step S1304, the training device 1100 determines the optimum combination of hyperparameters and the optimum weight based on the error index.

### <Summary>

As is clear from the above description, the training devices 1000 and 1100 according to the fifth embodiment generate
- the plurality of trained interpolation prediction models by setting the plurality of hyperparameters for the interpolation prediction model and training the interpolation prediction model, and generate
- the plurality of trained extrapolation prediction models by setting the plurality of hyperparameters for the extrapolation prediction model and training the extrapolation prediction model, and predict
- the first characteristic value and the second characteristic value by inputting the input data of the validation data set to all of the combinations of the plurality of trained interpolation prediction models and the plurality of trained extrapolation prediction models, and output

- respective prediction data under the plurality of types of weights based on the first characteristic value and the second characteristic value that have been predicted, and calculate an error from the actual data, thereby calculating an error index for each of the plurality of types of weights for each of the combinations of hyperparameters, and determine
- the combination of hyperparameters and the weight corresponding to the minimum error index, and notify, to the prediction device, the optimum trained interpolation prediction model and the optimum trained extrapolation prediction model and also notify the optimum weight to the prediction device.

Thereby, according to the prediction device 130 according to the fifth embodiment, it is possible to obtain a certain degree of prediction accuracy for the input data of the interpolation region, and also becomes possible to obtain sufficient prediction accuracy for the input data of the extrapolation region. That is, according to the fifth embodiment, it is possible to increase the prediction accuracy in the prediction device using the trained prediction model.

### [Sixth embodiment]

In the fifth embodiment, the hyperparameter and the weight are optimized on the premise that the interpolation prediction model and the extrapolation prediction model are respectively trained under specific training methods. Meanwhile, in the sixth embodiment, optimization of training methods used for the interpolation prediction model and the extrapolation prediction model, and a hyperparameter and a weight that are to be set will be described.

### <Functional configuration of training device in training phase>

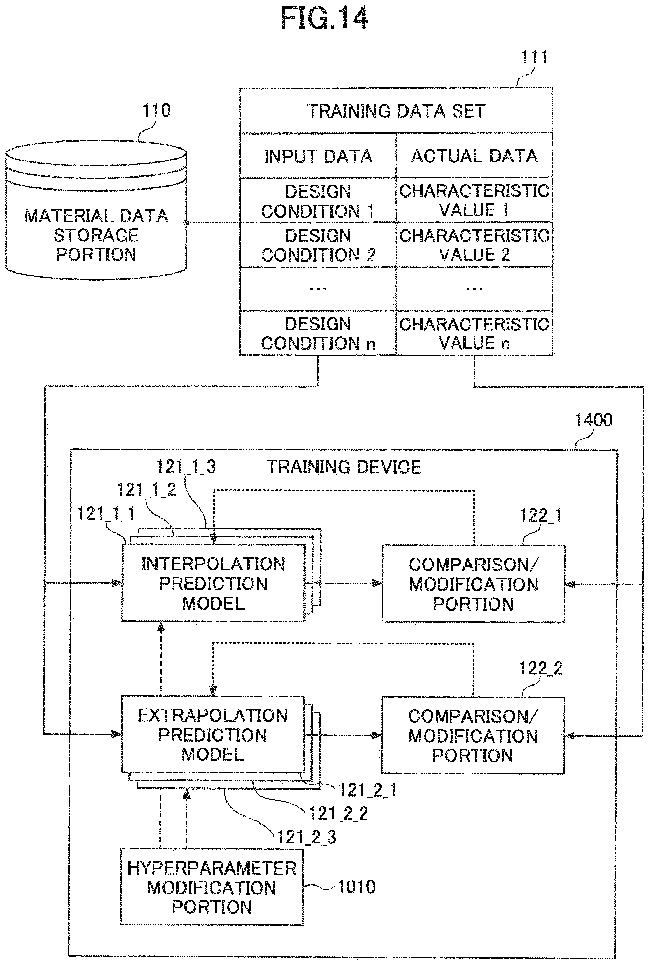

First, the functional configuration of the training device according to the sixth embodiment in the training phase will be described. FIG. 14 is a fourth diagram exemplarily illustrating the functional configuration of the training device in the training phase. The difference from the functional configuration described using FIG. 10 is that a training device 1400 includes
- interpolation prediction models 121_1_1, 121_1_2, 121_1_3, ... that are trained under mutually different training methods, and
- extrapolation prediction models 121_2_1, 121_2_2, 121_2_3, ... that are trained under mutually different training methods.

In the training device 1400, the interpolation prediction model 121_1_1 and the extrapolation prediction model 121_2_1 are trained using the training data set 111 every time the hyperparameter is modified. Thereby, the training device 1400 generates a plurality of trained interpolation prediction models and a plurality of trained interpolation prediction models from the interpolation prediction model 121_1_1 and the extrapolation prediction model 121_2_1.

Subsequently, in the training device 1400, the interpolation prediction model 121_1_2 and the extrapolation prediction model 121_2_2 are trained using the training data set 111 every time the hyperparameter is modified. Thereby, the training device 1400 generates a plurality of trained interpolation prediction models and a plurality of trained interpolation prediction models from the interpolation prediction model 121_1_2 and the extrapolation prediction model 121_2_2.

Subsequently, in the training device 1400, the interpolation prediction model 121_1_3 and the extrapolation prediction model 121_2_3 are trained using the training data set 111 every time the hyperparameter is modified. Thereby, the training device 1400 generates a plurality of trained interpolation prediction models and a plurality of trained interpolation prediction models from the interpolation prediction model 121_1_3 and the extrapolation prediction model 121_2_3.

Note that, for simplicity, FIG. 14 illustrates three interpolation prediction models trained by different training methods and three extrapolation prediction models trained by different training methods; however, the number of the interpolation prediction models trained by different training methods or the number of the extrapolation prediction models trained by different training methods is not limited to three.

### <Functional configuration of training device in optimization phase>

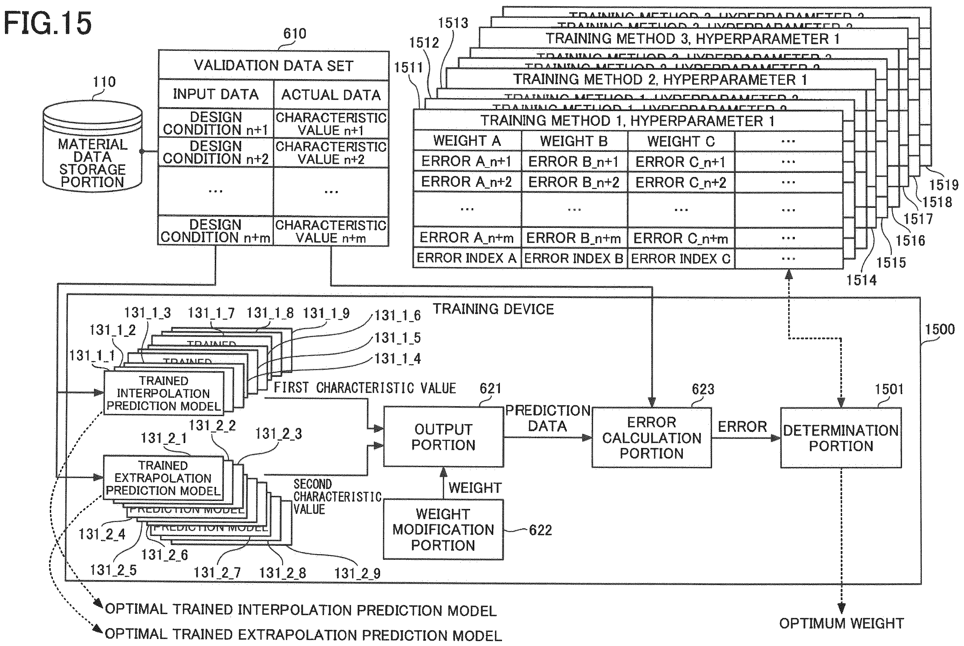

Next, the functional configuration of the training device according to the sixth embodiment in the optimization phase will be described. FIG. 15 is a fourth diagram exemplarily illustrating the functional configuration of the training device in the optimization phase. As illustrated in FIG. 15, in the optimization phase, a training device 1500 functions as
- the trained interpolation prediction models 131_1_1, 131_1_2, 131_1_3, ...,
- the trained extrapolation prediction models 131_2_1, 131_2_2, 131_2_3, ...,
- the output portion 621,
- the weight modification portion 622,
- the error calculation portion 623, and
- a determination portion 1501.

The training device 1500 uses the validation data set 610 stored in the material data storage portion 110, thereby optimizing the trained interpolation prediction model and the trained extrapolation prediction model to be applied to the prediction device 130, and also optimizing the weight to be set for the output portion 132.

The trained interpolation prediction models 131_1_1 to 131_1_3 are a plurality of trained interpolation prediction models that have been generated through training of the interpolation prediction model 121_1_1 in the training phase every time the hyperparameter for the interpolation prediction model is modified.

Also, the trained interpolation prediction models 131_1_4 to 131_1_6 are a plurality of trained interpolation prediction models that have been generated through training of the interpolation prediction model 121_1_2 in the training phase every time the hyperparameter for the interpolation prediction model is modified.

Also, the trained interpolation prediction models 131_1_7 to 131_1_9 are a plurality of trained interpolation prediction models that have been generated through training of the interpolation prediction model 121_1_3 in the training phase every time the hyperparameter for the interpolation prediction model is modified.

Meanwhile, the trained extrapolation prediction models 131_2_1 to 131_2_3 are a plurality of trained extrapolation prediction models that have been generated through training of the extrapolation prediction model 121_2_1 in the training phase every time the hyperparameter for the extrapolation prediction model is modified.

Also, the trained extrapolation prediction models 131_2_4 to 131_2_6 are a plurality of trained extrapolation prediction models that have been generated through training of the extrapolation prediction model 121_2_2 in the training phase every time the hyperparameter for the extrapolation prediction model is modified.

Also, the trained extrapolation prediction models 131_2_7 to 131_2_9 are a plurality of trained extrapolation prediction models that have been generated through training of the extrapolation prediction model 121_2_3 in the training phase every time the hyperparameter for the extrapolation prediction model is modified.

The input data of the validation data set 610 are sequentially input to each of the trained interpolation prediction model 131_1_1 and the like and the trained extrapolation prediction model 131_2_1 and the like. Thereby, each of the trained interpolation prediction model 131_1_1 and the like and the trained extrapolation prediction model 131_2_1 and the like sequentially predicts a plurality of first characteristic values and a plurality of second characteristic values.

Since the output portion 621 to the error calculation portion 623 are similar to the output portion 621 to the error calculation portion 623 of FIG. 11, description thereof is omitted here.

The determination portion 1501 determines an optimum training method, an optimum hyperparameter, and an optimum weight by referring to tables 1511 to 1519.

Note that, in FIG. 15, the tables 1511 to 1519 are each a list of the errors calculated by the error calculation portion 623. In the tables 1511 to 1519, -Training Method 1 refers to a combination of the training method used for training the interpolation prediction model 121_1_1 and the training method used for training the extrapolation prediction model 121_2_1,
- Training Method 2 refers to a combination of the training method used for training the interpolation prediction model 121_1_2 and the training method used for training the extrapolation prediction model 121_2_2, and
- Training Method 3 refers to a combination of the training method used for training the interpolation prediction model 121_1_3 and the training method used for training the extrapolation prediction model 121_2_3.

Also, in the tables 1511, 1512, and 1513,
- Hyperparameter 1 refers to a combination of the hyperparameter for the interpolation prediction model set for the trained interpolation prediction model 131_1_1 and the hyperparameter for the extrapolation prediction model set for the trained extrapolation prediction model 131_2_1,
- Hyperparameter 2 refers to a combination of the hyperparameter for the interpolation prediction model set for the trained interpolation prediction model 131_1_2 and the hyperparameter for the extrapolation prediction model set for the trained extrapolation prediction model 131_2_2, and
- Hyperparameter 3 refers to a combination of the hyperparameter for the interpolation prediction model set for the trained interpolation prediction model 131_1_3 and the hyperparameter for the extrapolation prediction model set for the trained extrapolation prediction model 131_2_3.

Also, in the table 1511
- Weight A = (the weight of the first characteristic value = 1.0, the weight of the second characteristic value = 0.0),
- Weight B = (the weight of the first characteristic value = 0.9, the weight of the second characteristic value = 0.1),
- Weight C = (the weight of the first characteristic value = 0.8, the weight of the second characteristic value = 0.2),

Also, in the table 1511,
- Error A_n+1 refers to an error between characteristic value n+1 that is actual data and prediction data output by the output portion 621 under the Weight A based on the first characteristic value and the second characteristic value that have been obtained in response to input of the design condition n+1.
- Error B_n+1 refers to an error between characteristic value n+1 that is actual data and prediction data output by the output portion 621 under the Weight B based on the first characteristic value and the second characteristic value that have been obtained in response to input of the design condition n+1.
- Error C_n+1 refers to an error between characteristic value n+1 that is actual data and prediction data output by the output portion 621 under the Weight C based on the first characteristic value and the second characteristic value that have been obtained in response to input of the design condition n+1.
- Error A_n+2 refers to an error between characteristic value n+2 that is actual data and prediction data output by the output portion 621 under the Weight A based on the first characteristic value and the second characteristic value that have been obtained in response to input of the design condition n+2.
- Error B_n+2 refers to an error between characteristic value n+2 that is actual data and prediction data output by the output portion 621 under the Weight B based on the first characteristic value and the second characteristic value that have been obtained in response to input of the design condition n+2.
- Error C_n+2 refers to an error between characteristic value n+2 that is actual data and prediction data output by the output portion 621 under the Weight C based on the first characteristic value and the second characteristic value that have been obtained in response to input of the design condition n+2.
- Error A_n+m refers to an error between characteristic value n+m that is actual data and prediction data output by the output portion 621 under the Weight A based on the first characteristic value and the second characteristic value that have been obtained in response to input of the design condition n+m.
- Error B_n+m refers to an error between characteristic value n+m that is actual data and prediction data output by the output portion 621 under the Weight B based on the first characteristic value and the second characteristic value that have been obtained in response to input of the design condition n+m.
- Error C_n+m refers to an error between characteristic value n+m that is actual data and prediction data output by the output portion 621 under the Weight C based on the first characteristic value and the second characteristic value that have been obtained in response to input of the design condition n+m.

Also, in the table 1511,
- Error Index A refers to a statistical value of Error A_n+1 to Error A_n+m (e.g., an average value),
- Error Index B refers to a statistical value of Error B_n+1 to Error B_n+m (e.g., an average value), and
- Error Index C refers to a statistical value of Error C_n+1 to Error C_n+m (e.g., an average value).

The determination portion 1501, for example, identifies the minimum value from among Error Index A, Error Index B, Error Index C, ... in the Training Methods 1, 2, and 3 and the Hyperparameters 1, 2, and 3. Also, the determination portion 1501 further identifies the minimum value from the minimum values determined for each training method and each hyperparameter. Thereby, the determination portion 1501 determines the corresponding training method, the corresponding hyperparameter, and the corresponding weight as an optimum training method, an optimum hyperparameter, and an optimum weight.

Also, the determination portion 1501 notifies, to the prediction device 130, the trained interpolation prediction model and the trained extrapolation prediction model that have been generated through training under the combination indicated by the determined training method with the combination indicated by the determined hyperparameter being set. Also, the determination portion 1501 notifies the determined weight to the prediction device 130.

Thereby, the prediction device 130 can perform the prediction process under the optimized trained interpolation prediction model and the optimized trained extrapolation prediction model, and the optimized weight.

### <Flow of training process and prediction process>

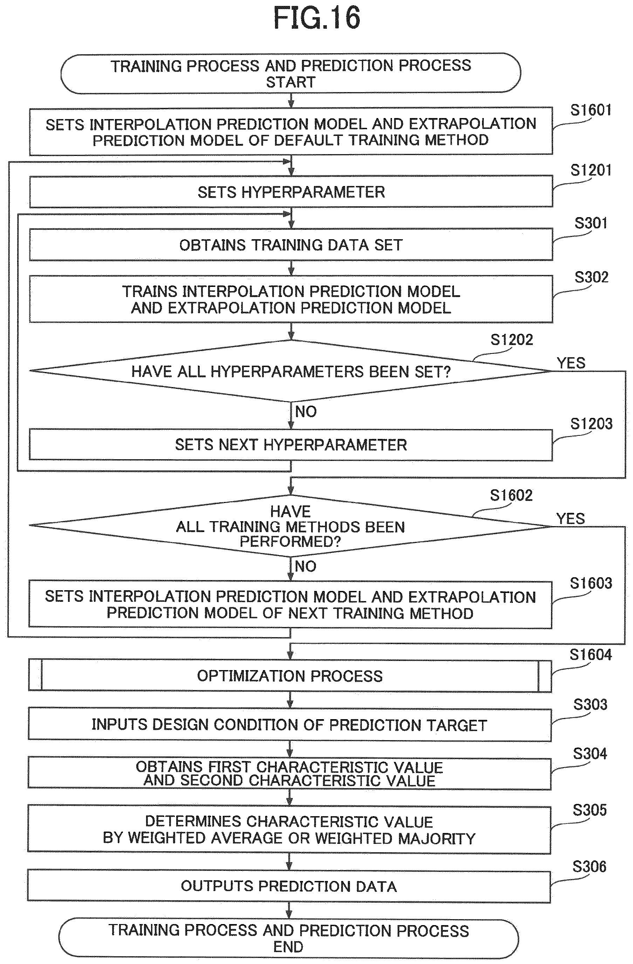

Next, the flow of the training process and the prediction process will be described. FIG. 16 is a fifth flowchart illustrating the flow of the training process and the prediction process. The differences from the fourth flowchart described using FIG. 12 are steps S1601 and S1602 to S1604.

In step S1601, the training device 1400 sets an interpolation prediction model to be trained under a default training method from among a plurality of interpolation prediction models to be trained under mutually different training methods. Also, the training device 1500 sets an extrapolation prediction model to be trained under a default training method from among a plurality of extrapolation prediction models to be trained under mutually different training methods.

In step S1602, the training device 1400 trains the interpolation prediction model under all of the plurality of training methods that have been provided in advance, and determines whether a trained interpolation prediction model has been generated. Also, the training device 1400 trains the extrapolation prediction model under all of the plurality of training methods that have been provided in advance, and determines whether a trained extrapolation prediction model has been generated.

In step S1602, when it is determined that there is a training method that has not been used for the training (in the case of "NO" in step S1602), the process proceeds to step S1603.

In step S1603, the training device 1400 sets an interpolation prediction model to be trained under the next training method or an extrapolation prediction model to be trained under the next training method, and the process returns to step S1201.

Meanwhile, in step S1602, when it is determined that the training has been performed under all of the training methods provided in advance (in the case of "YES" in step S1602), the process proceeds to step S1604.

In step S1604, the training device 1500 executes an optimization process that optimizes the training method, the hyperparameter, and the weight. Note that, details of the optimization process (step S1604), which optimizes the training method, the hyperparameter, and the weight, will be described below.

### <Flow of optimization process>

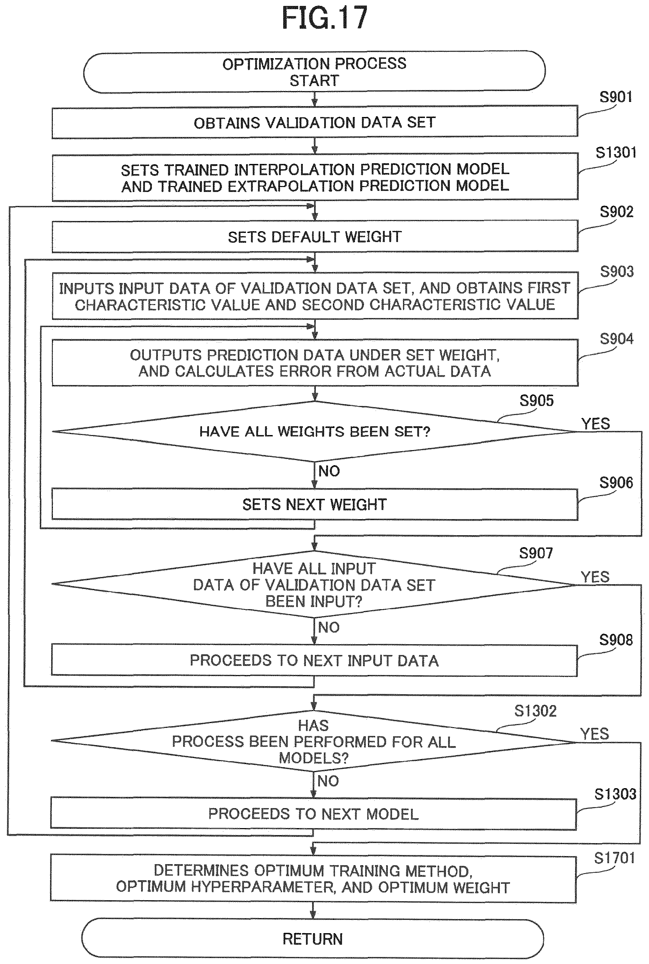

FIG. 17 is a third flowchart illustrating the flow of the optimization process. The difference from the optimization process as illustrated in FIG. 13 is step S1701.

In step S1701, the training device 1500 determines, based on the error index, an optimum combination of the training methods, an optimum combination of the hyperparameters, and an optimum combination of the weights.

### <Summary>

As is clear from the above description, the training device 1500 according to the sixth embodiment generates
- the plurality of trained interpolation prediction models by training the plurality of interpolation prediction models to be trained under different training methods with the plurality of hyperparameters for the interpolation prediction model being set, and generates
- the plurality of trained extrapolation prediction models by training the plurality of extrapolation prediction models to be trained under different training methods with the plurality of hyperparameters for the extrapolation prediction model being set, and predicts
- the first characteristic value and the second characteristic value by inputting the input data of the validation data set to all of the combinations of the plurality of trained interpolation prediction models and the plurality of trained extrapolation prediction models, and outputs
- respective prediction data under the plurality of types of weights based on the predicted first characteristic value and the predicted second characteristic value, and calculates an error from the actual data, thereby calculating error indices for the plurality of types of weights for each of the combinations of the training methods and for each of the combinations of the hyperparameters, and determines
- the combination of the training methods, the combination of the hyperparameters, and the weight each corresponding to the minimum error index, and notifies, to the prediction device, the optimum trained interpolation prediction model and the optimum trained extrapolation prediction model, and also notifies the optimum weight to the prediction device.

Thereby, according to the prediction device 130 according to the sixth embodiment, it is possible to obtain a certain degree of prediction accuracy for the input data of the interpolation region, and also becomes possible to obtain sufficient prediction accuracy for the input data of the extrapolation region. That is, according to the sixth embodiment, it is possible to increase the prediction accuracy in the prediction device using the trained prediction model.

### [EXAMPLES]

In the following, a specific example of the fourth embodiment of the above-described embodiments will be described. Note that, in the description of the Examples, the material data storage portion 110 stores, for example, a solubility data set for 1311 molecules, which is published at ALOGPS (http://www.vcclab.org/lab/alogps/) .

When the training process and the prediction process are performed using the solubility data set, these processes are performed, for example, in accordance with the following procedure according to the second embodiment.

### (1) Step 1

Molecular structures described in the solubility data set in the SMILES format are converted to 187-dimensional feature vectors using rdkit. Chem. Descriptors of RDKit.

### (2) Step 2

The solubility data set converted to the 187-dimensional feature vectors is randomly divided at a proportion of 56.25%/18.75%/25% for a training data set/a validation data set/a prediction data set.

### (3) Step 3

A random forest regression model of scikit-learn, which is the interpolation prediction model, is trained using the training data set. Also, a Gaussian process regression model, which is the extrapolation prediction model, is trained using the training data set.

### (4) Step 4

A trained random forest regression model trained in step 3 is used as the interpolation/extrapolation identification portion 410. Through input of respective input data of the validation data set, a standard deviation of predicted values is calculated. When the calculated standard deviation is less than 0.6, the corresponding input data are identified as input data of the interpolation region. Meanwhile, when the calculated standard deviation is 0.6 or more, the corresponding input data are identified as input data of the extrapolation region. Note that, a threshold = 0.6 is a median of the standard deviation of the predicted values.

### (5) Step 5-1

The first characteristic value is predicted by inputting the input data of the interpolation region in the input data of the validation data set to the trained interpolation prediction model (trained random forest regression model). The second characteristic value is predicted by inputting the input data of the interpolation region in the input data of the validation data set to the trained extrapolation prediction model (trained Gaussian process regression model). By comparing the predicted first and second characteristic values with the actual data of the validation data set, "the weight of the first characteristic value : the weight of the second characteristic value" is optimized. As a result, in the present embodiment, the weight of the first characteristic value : the weight of the second characteristic value = 0.55 : 0.45 was obtained as the weight for the input data of the interpolation region.

### (6) Step 5-2

The first characteristic value is predicted by inputting the input data of the extrapolation region in the input data of the validation data set to the trained interpolation prediction model (trained random forest regression model). The second characteristic value is predicted by inputting the input data of the extrapolation region in the input data of the validation data set to the trained extrapolation prediction model (trained Gaussian process regression model). By comparing the predicted first and second characteristic values with the actual data of the validation data set, "the weight of the first characteristic value : the weight of the second characteristic value" is optimized. As a result, in the present embodiment, the weight of the first characteristic value : the weight of the second characteristic value = 0.40 : 0.60 was obtained as the weight for the input data of the extrapolation region.

### (7) Step 6

A similar process to the above Step 4 is performed on respective input data of the prediction data set, thereby identifying whether the input data are input data of the interpolation region or input data of the extrapolation region.

### (8) Step 7

The first characteristic value is predicted by inputting the input data of the prediction data set to the trained interpolation prediction model (trained random forest regression model). The second characteristic value is predicted by inputting the input data included in the prediction data set to the trained extrapolation prediction model (trained Gaussian process regression model). For the predicted first characteristic value and the predicted second characteristic value, prediction data are output under a weight in accordance with the identification result in Step 6. For example, when the input data are identified as the input data of the interpolation region, a weighted average value with the weight of the first characteristic value : the weight of the second characteristic value = 0.55 : 0.45 is output as the prediction data. Meanwhile, when the input data are identified as the input data of the extrapolation region, a weighted average value with the weight of the first characteristic value : the weight of the second characteristic value = 0.40 : 0.60 is output as the prediction data.

### (9) Step 8

Prediction accuracy of the prediction data calculated for the input data of the prediction data set is evaluated in terms of R² that is defined by the square of a correlation coefficient. At this time, the prediction accuracy is compared with prediction accuracy of the prediction data obtained by inputting all of the input data of the prediction data set to the trained interpolation prediction model (trained random forest regression model) (Comparative Example 1). Furthermore, the prediction accuracy is compared with prediction accuracy of the prediction data obtained by inputting all of the input data of the prediction data set to the trained extrapolation prediction model (trained Gaussian process regression model) (Comparative Example 2).

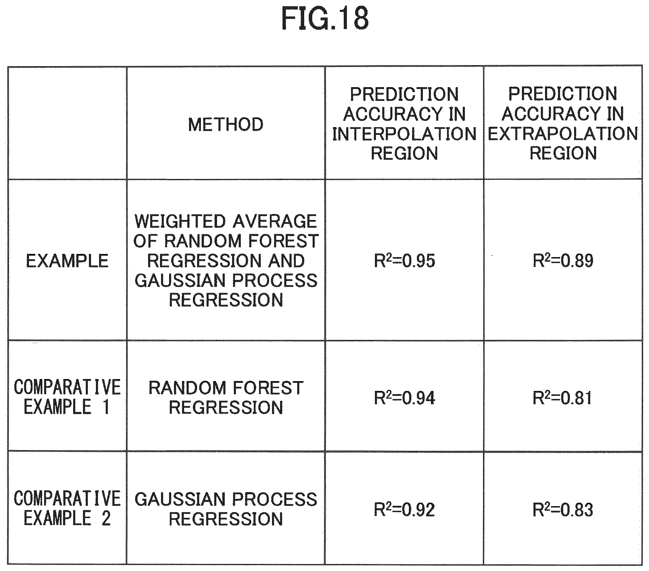

FIG. 18 is a table exemplarily illustrating the prediction accuracy. As illustrated in FIG. 18, both when the input data of the interpolation region are input and when the input data of the extrapolation region are input, the prediction accuracy in the present embodiment is found to be higher than the prediction accuracy in Comparative Example 1 and Comparative Example 2.

In this way, by calculating the weighted average value based on the optimum weight, it is possible to achieve cancellation between the prediction error by the random forest regression model and the prediction error by the Gaussian process regression model.

### [Other embodiments]

In the above-described embodiments, the training device and the prediction device are separate devices. However, the training device and the prediction device may be configured as an integrated device. Also, in the third to sixth embodiments, the training device in the training phase and the training device in the optimization phase are separate devices. However, the training device in the training phase and the training device in the optimization phase may be configured as an integrated device.

Also, in the sixth embodiment, specific examples of the training method are not described. However, the training method used for training the interpolation prediction model is, for example, preferably a decision tree-based ensemble method such as a decision tree, a random forest, gradient boosting, bagging, or AdaBoost. This is because the decision tree-based ensemble method tends to readily achieve over-fitting, and can realize high prediction accuracy for the input data of the interpolation region.

Alternatively, the training method used for training the interpolation prediction model may be a k-nearest neighbor algorithm that is strongly influenced by the training data set.

Alternatively, the training method used for training the interpolation prediction model may be a neural network. This is because, in particular, the neural network having two or more intermediate layers tends to readily achieve over-fitting, and can realize high prediction accuracy for the input data of the interpolation region.

Meanwhile, the training method used for training the extrapolation prediction model is, for example, preferably a Gaussian process. This is because the Gaussian process does not tend to readily achieve over-fitting, and can realize relatively high prediction accuracy for the input data of the extrapolation region.

Alternatively, the training method used for training the extrapolation prediction model is preferably a Kernel-based training method such as Kernel ridge or a support vector machine, in addition to the Gaussian process. This is because the Kernel-based training method can realize high prediction accuracy for the input data of the extrapolation region by appropriately setting a Kernel function.

Alternatively, the training method used for training the extrapolation prediction model may be a linear training method such as linear, partial least squares, lasso, linear ridge, elastic net, or Bayesian ridge. This is because the linear training method is effective in a case in which material characteristics in the extrapolation region are expected to exhibit a linear behavior or a case in which a behavior of material characteristics can be linearized by, for example, pre-processing the input data of the training data set.

Alternatively, the training method used for training the extrapolation prediction model may be a neural network. This is because, in particular, the neural network having two or less intermediate layers does not tend to readily achieve over-fitting, and further can realize high prediction accuracy for the input data of the extrapolation region by appropriately setting an activation function.

Also, in the above-described embodiments, how to use the prediction data output by the prediction device is not described. However, for example, the prediction data can be used for determining design conditions for producing a target material. Also, a material is produced by a material production apparatus under the determined design conditions, followed by measurement of characteristic values of the produced material, thereby being able to newly add the determined design conditions and the measured characteristic values to the training data set. Furthermore, by configuring the interpolation prediction model or the extrapolation prediction model to undergo re-training using the training data set, it is possible to repeat the development cycle of the prediction model.

Note that, the present invention should not be construed as being limited to the configurations described herein and, for example, other elements can be combined with the above-described embodiments. In this regard, it is possible to make modifications within the scope without deviating from the gist of the present invention, and make appropriate definitions in accordance with applied forms thereof.

The present application claims priority to Japanese Patent Application No. 2021-083921, filed May 18, 2021, the contents of which are incorporated herein by reference in their entirety.

### DESCRIPTION OF REFERENCE NUMERALS

- 111: : training data set
- 120: : training device
- 121_1: : interpolation prediction model
- 121_2: : extrapolation prediction model
- 130: : prediction device
- 131_1: : trained interpolation prediction model
- 131_2: : trained extrapolation prediction model
- 132: : output portion
- 400: : prediction device
- 410 portion: : interpolation/extrapolation identification
- 610: : validation data set
- 620: : training device
- 621: : output portion
- 622: : weight modification portion
- 623: : error calculation portion
- 624: : determination portion
- 710: : training device
- 711: : determination portion
- 1000: : training device
- 1010: : hyperparameter modification portion
- 1100: : training device
- 1101: : determination portion
- 1400: : training device
- 1500: : training device
- 1501: : determination portion

## Claims

1. A prediction device, comprising:
a first trained model and a second trained model configured to respectively output first output data and second output data in response to input of input data of a prediction target; and
an output portion configured to obtain the first output data and the second output data and calculate a weighted average value or take a weighted majority, thereby outputting prediction data,
the first trained model being configured such that prediction accuracy for the input data of an interpolation region becomes higher than in the second trained model, and the second trained model being configured such that prediction accuracy for the input data of an extrapolation region becomes higher than in the first trained model.

2. The prediction device according to claim 1, wherein the output portion calculates the weighted average value or takes the weighted majority under a predefined weight.

3. The prediction device according to claim 2, wherein the predefined weight is determined based on an error between:
the prediction data respectively output by the output portion under a plurality of types of weights in response to input of input data of a validation data set; and
actual data corresponding to the input data of the validation data set.

4. The prediction device according to claim 2,
wherein the first trained model, the second trained model, and the predefined weight are determined based on an error between:
the prediction data respectively output by the output portion under a plurality of types of weights in response to input of input data of a validation data set to a plurality of types of first trained models and a plurality of types of second trained models; and
actual data corresponding to the input data of the validation data set.

5. The prediction device according to claim 4, wherein
the plurality of types of first trained models are provided with mutually different hyperparameters, and/or are trained under mutually different training methods, and
the plurality of types of second trained models are provided with mutually different hyperparameters, and/or are trained under mutually different training methods.

6. The prediction device according to claim 1, further comprising an identification portion configured to identify whether the input data of the prediction target are the input data of the interpolation region or the input data of the extrapolation region,
wherein the output portion calculates the weighted average value or takes the weighted majority under a weight in accordance with an identification result by the identification portion.

7. The prediction device according to claim 1, further comprising an identification portion configured to evaluate a magnitude of extrapolation of the input data of the prediction target,
wherein the output portion calculates the weighted average value or takes the weighted majority under a weight in accordance with an evaluation result by the identification portion.

8. The prediction device according to claim 7, wherein the identification portion evaluates the magnitude of the extrapolation of the input data of the prediction target using one or more of an evaluation method by uncertainty of random forest prediction, an evaluation method by uncertainty of Bayesian estimation, an evaluation method by Kernel density estimation, and an evaluation method by distance.

9. The prediction device according to claim 6, wherein
the weight in accordance with the identification result includes a weight for the interpolation region and a weight for the extrapolation region,
the weight for the interpolation region is determined based on an error between:
prediction data respectively output by the output portion under a plurality of types of weights in response to input of input data of the interpolation region of a validation data set; and
actual data corresponding to the input data of the interpolation region of the validation data set, and
the weight for the extrapolation region is determined based on an error between:
prediction data respectively output by the output portion under a plurality of types of weights in response to input of input data of the extrapolation region of the validation data set; and
actual data corresponding to the input data of the extrapolation region of the validation data set.

10. The prediction device according to claim 1, wherein
the first trained model is trained under one or more training methods of a decision tree, a random forest, gradient boosting, bagging, AdaBoost, a k-nearest neighbor algorithm, and a neural network, and
the second trained model is trained under one or more training methods of a Gaussian process, Kernel ridge, a support vector machine, linear, partial least squares, lasso, linear ridge, elastic net, Bayesian ridge, and a neural network.

11. A training device, comprising:
a first trained model and a second trained model configured to respectively output first output data and second output data in response to input of input data of a validation data set;
an output portion configured to obtain the first output data and the second output data and calculate a weighted average value or take a weighted majority under a plurality of types of weights, thereby outputting respective prediction data; and
a determination portion configured to determine any one weight of the plurality of types of weights based on an error between the output respective prediction data and actual data corresponding to the input data of the validation data set.

12. The training device according to claim 11, wherein
the determination portion determines a weight for an interpolation region based on an error between:
the respective prediction data output by the output portion in response to input of input data of the interpolation region of the validation data set; and
actual data corresponding to the input data of the interpolation region of the validation data set, and
the determination portion determines a weight for an extrapolation region based on an error between:
the respective prediction data output by the output portion in response to input of input data of the extrapolation region of the validation data set; and
actual data corresponding to the input data of the extrapolation region of the validation data set.

13. The training device according to claim 11, wherein
the output portion obtains the first output data and the second output data respectively output by a plurality of types of first trained models and a plurality of types of second trained models in response to input of input data of the validation data set to the plurality of types of the first trained models and the plurality of types of the second trained models, and calculates the weighted average value or takes the weighted majority under the plurality of types of weights, thereby outputting the respective prediction data, and
the determination portion determines, based on an error between the output respective prediction data and actual data corresponding to the input data of the validation data set:
any one first trained model of the plurality of types of the first trained models;
any one second trained model of the plurality of types of the second trained models; and
any one weight of the plurality of types of weights.

14. The training device according to claim 13, wherein
the plurality of types of the first trained models are provided with mutually different hyperparameters, and/or are trained under mutually different training methods, and
the plurality of types of the second trained models are provided with mutually different hyperparameters, and/or are trained under mutually different training methods.

15. The training device according to claim 11, wherein
the first trained model is configured such that prediction accuracy for the input data of an interpolation region becomes higher than in the second trained model, and
the second trained model is configured such that prediction accuracy for the input data of an extrapolation region becomes higher than in the first trained model.

16. The training device according to claim 15, wherein
the first trained model is trained under one or more training methods of a decision tree, a random forest, gradient boosting, bagging, AdaBoost, a k-nearest neighbor algorithm, and a neural network, and
the second trained model is trained under one or more training methods of a Gaussian process, Kernel ridge, a support vector machine, linear, partial least squares, lasso, linear ridge, elastic net, Bayesian ridge, and a neural network.

17. A prediction method, comprising:
outputting first output data and second output data respectively by a first trained model and a second trained model in response to input of input data of a prediction target; and
obtaining the first output data and the second output data and calculating a weighted average value or taking a weighted majority, thereby outputting prediction data,
the first trained model being configured such that prediction accuracy for the input data of an interpolation region becomes higher than in the second trained model, and the second trained model being configured such that prediction accuracy for the input data of an extrapolation region becomes higher than in the first trained model.

18. A training method, comprising:
outputting first output data and second output data respectively by a first trained model and a second trained model in response to input of input data of a validation data set;
obtaining the first output data and the second output data and calculating a weighted average value or taking a weighted majority under a plurality of types of weights, thereby outputting respective prediction data; and
determining any one weight of the plurality of types of weights based on an error between the output respective prediction data and actual data corresponding to the input data of the validation data set.

19. A prediction program that causes a computer to execute:
outputting first output data and second output data respectively by a first trained model and a second trained model in response to input of input data of a prediction target; and
obtaining the first output data and the second output data and calculating a weighted average value or taking a weighted majority, thereby outputting prediction data,
the first trained model being configured such that prediction accuracy for the input data of an interpolation region becomes higher than in the second trained model, and the second trained model being configured such that prediction accuracy for the input data of an extrapolation region becomes higher than in the first trained model.

20. A training program that causes a computer to execute:
outputting first output data and second output data respectively by a first trained model and a second trained model in response to input of input data of a validation data set;
obtaining the first output data and the second output data and calculating a weighted average value or taking a weighted majority under a plurality of types of weights, thereby outputting respective prediction data; and
determining any one weight of the plurality of types of weights based on an error between the output respective prediction data and actual data corresponding to the input data of the validation data set.
